# EUROPEAN PATENT SPECIFICATION

(11) **EP 1 756 749 B1**
(45) Date of publication and mention of the grant of the patent: **27.03.2013**
(21) Application number: 05741697.6
(22) Date of filing: 05.05.2005
(51) Int. Cl.: H04N 1/60

(54) **GENERATION OF COLOR MEASUREMENTS FROM TRANSFORM-BASED COLOR PROFILES AND CREATION OF TRANSFORM-BASED PROFILES BY A MEASUREMENT-BASED COLOR MANAGEMENT SYSTEM**
ERZEUGUNG VON FARBMESSUNGEN AUSGEHEND VON TRANSFORMATIONSBASIERTEN FARBPROFILEN UND ERSTELLUNG VON TRANSFORMATIONSBASIERTEN PROFILEN MITTELS EINES MESSUNGSBASIERTEN FARBVERWALTUNGSSYSTEMS
GENERATION DE MESURES DE COULEURS A PARTIR DE PROFILS DE COULEURS A BASE DE TRANSFORMEE ET CREATION DE PROFILS A BASE DE TRANSFORMEE GRACE A UN SYSTEME DE GESTION DE COULEURS A BASE DE MESURES

(30) Priority: 05.05.2004 US 840554; 03.05.2005 US 121409
(43) Date of publication of application: 28.02.2007
(73) Proprietor: CANON KABUSHIKI KAISHA, Ohta-ku Tokyo 146-8501 (JP); Microsoft Corporation, Redmond, WA 98052-6399 (US)
(72) Inventor: HAIKIN, John, S., Fremont, CA 94539 (US); NEWMAN, Todd, D., Palo Alto, CA 94303 (US)
(74) Representative: TBK
(86) International application number: PCT/US2005/015845
(87) International publication number: WO 2005/109318

(56) References cited:
- EP-A- 1 102 478
- WO-A-99/01982
- US-A1- 2003 016 862
- US-A1- 2003 202 194
- US-A1- 2005 099 427
- US-A1- 2005 105 106
- US-B1- 6 603 483
- US-B1- 6 650 771
- DATABASE COMPENDEX [Online] ENGINEERING INFORMATION, INC., NEW YORK, NY, US; MORONEY NATHAN ET AL: "The CIECAM02 color appearance model" XP002490361 Database accession no. E2003357609145 & PROC COLOR IMAGING CONF COLOR SCI SYST APPL; PROCEEDINGS OF THE COLOR IMAGING CONFERENCE: COLOR SCIENCE, SYSTEMS, AND APPLICATIONS 2002, 2002, pages 23-27,

## Description

### BACKGROUND

### Field of the Invention

The present invention relates generally to Color Management Systems (CMSs) and more particularly, to measurement-based CMSs that can generate transform-based profiles either automatically or under user control and to a color management system for generating color measurements from transform-based color profiles for use in a measurement-based color management system.

### Description of the Related Art

Typically, color management systems utilize standardized transform-based color profiles for the conversion of color image data between device-dependent and device-independent color spaces. Such transform-based color profiles are often created by a hardware manufacturer of a given color device, such as a printer or a digital camera. Typically, transform-based color profiles are designed to meet the specifications set forth by the International Color Consortium (ICC). The current specification is entitled Specification ICC.1:2003-09, File Format for Color Profiles [Version 4.1.0], September 24, 2003, and may be found at http://www.color.org/icc_specs2.html.

A color transform contained in a transform-based color profile can be in the form of an n-dimensional lookup-table (LUT) or a set of tone reproduction curves (TRC) and a matrix. For instance, in the case of a CRT monitor, a set of tone reproduction curves and a matrix can be used by a CMM to convert RGB values used by the device to device-independent color space values. The device-independent color space values can then be converted to a device-dependent color space utilizing the same CMM in combination with another device's transform-based color profile.

More recently, measurement-based CMMs have been developed that use device profiles which include actual measurements of the device's color characteristics, such as XYZ measurements of color patch data from an IT8.7/2 target. Measurement-based CMMs are sometimes called "smart" CMMs for their ability to use the actual measurements to obtain increasingly refined color characteristics of the profiled device.

Unlike a typical transform-based CMM, however, measurement-based "smart" CMMs cannot directly utilize the color transforms contained within transform-based color profiles. This is because "smart" CMMs directly utilize color measurement data profiles corresponding to a color device to generate a color transform for converting image data from a device-dependent color space to a device-independent color space.

Given the widespread use of transform-based color profiles for color devices, such as ICC color profiles, it is desirable to have a method for utilizing these transform-based color profiles in combination with a measurement-based "smart" CMM.

In addition, there are many software profile-building tools that convert colorimetric measurement data into an International Color Consortium (ICC) device profile. Most of these tools directly control various measuring devices, such as colorimeters, spectrophotometers, and spectroradiometers, to capture the colorimetric data. The better tools offer some controls to let users control some aspects of black-generation, under color removal, and similar areas that address the many-to-one relationship between device control values and colorimetry. Some tools even offer the option of directly manipulating the one dimensional lookup tables, multi-dimensional lookup tables, and matrices in the resultant ICC device profile.

It is also a common feature of these systems that the colorimetric measurements may be stored in a data file. Often, these measurements are stored in a standard file format like the CGATS IT8.7 series of file formats.

The profile-building tools referred to above are used to create transform-based profiles that work in transform-based Color Management Modules (CMMs). A transform-based CMM makes use of an internal Profile Connection Space (PCS) that has a colorimetrically-defined color space volume. The viewing conditions of the PCS are strictly defined. This allows the PCS values to represent a known appearance.

The ICC discovered that it was important that the PCS also have a limited volume. If a printer device model, for example, had to map all possible color appearance values to fit within the gamut of the printer, then the gamut of color appearance values produced by typical source devices ends up over-compressed. In order to overcome this problem, the ICC has defined a reference PCS gamut. Earlier, the definition of the PCS gamut was determined by individual vendors, who often did not publish the characteristics of this gamut. Colors within the PCS reference gamut occupy most or all of the printer's gamut. Colors outside the reference PCS gamut are either clipped or compressed into a narrow range of the printer's gamut. Note that similar compression may be necessary for input devices with a gamut that extends outside the PCS reference gamut. One example is the gamut of a monitor. The light green of the green primary is outside the typical PCS reference gamut and so must be compressed.

ICC profiles are called transform-based profiles because mapping between the source colorimetry in the source viewing conditions to the volume of the PCS in the PCS viewing conditions, which requires a significant amount of processing and often requires certain aesthetic decisions as well, is performed by the profile building software and is stored in the profile in the form of a pre-computed transform. There are several steps involved in computing this transform. First, the source device values must be converted into colorimetry - a process called "device modeling." Next, the source colorimetry and source viewing conditions are used to create color appearance values in a color appearance space. If some of the original color appearance does not fit within the PCS gamut, then some sort of gamut mapping will be needed. Many different Gamut Mapping Algorithms (GMAs) are known; it is an aesthetic decision which one to use. This mapping from source device space to the PCS gamut is called an AToB mapping. Once the mapping has been determined, the profile-building application creates a multidimensional lookup table (LUT). Using the LUT, a CMM can map from device control value to PCS value using simple table lookup and interpolation techniques. All the complex calculations took place when the LUT was created. A similar mapping, called a BToA mapping, is required to obtain device control values for an output device from PCS values.

ICC users have long requested that suppliers of CMSs move from the "Smart profile/dumb CMM" model to a "Dumb Profile/Smart CMM" model, that is, from a transform-based architecture to a measurement-based one. In a measurement-based model, the profiles contain only the colorimetric measurements themselves and the computation of the color transformation is performed by the CMS. US patent 6,603,483 describes such an architecture. Such measurement-based profiles are much easier for users to validate and, if necessary, modify.

It may be the case in a networked computer environment that there are computers where the operating system supports a transform-based CMS and computers where the operating system supports a measurement-based CMS. A system based on measurement profiles may need to print to a networked printer. If that printer either is on an operating system using transform-based profiles or if the printer directly supports transform-based profiles, then there may be a need to provide a transform-based profile that has equivalent behavior to the color management transformation obtained from the measurement-based profile in a measurement-based CMS.

In the case above, if the destination machine (printer or networked computer) does not validate profiles, there is no need to create a completely conformant transform-based profile, since only one of the two transforms (AtoB or BtoA) is needed. However, profile building software will always build both transforms. Thus, it may be desirable to be able to create only the needed elements of the transform-based profile from the measurements.

One approach would be to use the measurements as input to a typical ICC profile builder. There are several possible problems with this approach. First, it may be important to perform this conversion in an automated system without requiring user intervention. Second, the measurement-based profiles may not contain the specific measurement values needed for the profile builder. Third, it is desirable to provide users with as much consistency with the measurement-based CMS as possible. Fourth, it would be advantageous to use the device-specific expertise that hardware vendors use in creating device model plug-ins for the measurement-based CMS. It is also desirable that the solution be able to avoid the limitations of the print-centric ICC PCS. (By "print-centric," it is meant that the PCS gamut is shaped like that of a typical ink-jet printer, with the most chromatic values being dark. When transforming between two video displays, the print-centric gamut requires clipping colors to the PCS gamut that are actually within the gamut of both the source and destination devices.)

In the networked environment described above, it may be desirable to obtain color results that are as consistent as possible across all the computers, regardless of how their CMS works. This is difficult to achieve when some profiles are measurement-based and the intelligence is in the CMM and other profiles are transformed-based, with the intelligence in the profile builder.

Another conventionally known technique is known from the document EP-A-1 102 478, which discloses a color management and proofing architecture. Namely, there is disclosed a color management system whereby an efficient sequence of transform steps is generated for transforming color image data through one or more color spaces. The sequence of transform steps is generated based upon pre-selected color profiles and gamut mapping algorithms.

Still another conventionally known technique is known from the document US 2003/016862 A1, which discloses an image processing apparatus and method as well as a profile generating method.

Generally, e.g. from the document US 2003/202194 A1, it is also known to establish such profiles which do not perform an entire transformation from source device to destination device, but are limited to a transformation from a device-dependent color space to PCS and vice versa.

In view of the above, a need exists for a CMS that is capable of generating transform-based profiles from measurement-based profiles. The CMS should be capable of using as much device-specific information as is available to the CMS and the generation process should be capable of being automated. Various aspects of the present invention meet such a need.

### SUMMARY OF THE INVENTION

According to the present invention, there are disclosed a color processing method for generating a transform-based profile, an apparatus for generating a transform-based profile, and a computer program product, as defined in the claims attached herewith.

Basically, the present invention as claimed relates to transform-based profile generation as described hereinafter.

In connection with the present invention as claimed, the following aspects are disclosed.

In one aspect color measurements are generated from transform-based device profiles for use in a measurement-based color management system. The color measurements are generated by providing device-dependent color samples to a transform-based color management module and converting them to the profile connection space with the device's transform-based profile. Color measurements are then generated from the transform-based color management module by applying an identity profile in place of a destination device profile. In addition, measurement data can be extracted directly from either the tone reproduction curve/matrix or n-dimensional lookup table transforms contained within a transform-based device profile.

In another aspect a method and apparatus for generating transform-based color profiles by a measurement-based Color Management System (CMS) is provided. The measurement-based CMS generates the transform-based profile wherein the measurement-based color system is parameterized by color data and procedures. The CMS may use a reference Profile Connection Space (PCS) loaded from a measurement profile, thus enabling user configuration of the generation process. The reference PCS may also be set to include a gamut that is appropriate for an eventual color-output device. In addition, a Gamut Mapping Model (GMM) used in the generation process is user-selectable as well as a Device Model (DM). The DM may also be supplied as a pluggable module. The CMS also features user-selectable mapping from an International Color Consortium (ICC) intent to a PCS profile and to a DM. The features of the CMS may be used in an application, stand-alone profiling tool or in an operating system utility.

In another aspect a color management system is provided in which color measurements are generated mathematically from transform-based color profiles for use in measurement-based color management systems.

According to one aspect color measurements are generated for use in a measurement-based color management system by accessing a transform-based color profile which contains a color transform for transforming color data from a device-dependent color space to a colorimetric device-independent color space. Color measurements are generated using the color transform of the color profile. A color appearance-based transform is created using the generated color measurements, wherein the color appearance based transform is consistent with a color appearance model used by the measurement-based color management system for transforming color image data to an internal color appearance space.

According to one aspect device-dependent color samples are supplied to a transform-based color management module. The device-dependent color samples represent color values at which a device would be measured to create a measurement data profile. The supplied device-dependent color samples are converted to a colorimetric device-independent color space with the color management module by utilizing the color transform contained within the transform-based color profile. The converted device-dependent color samples are then scaled with an identity profile in order to generate color measurements.

In this way, there is provided a convenient method for generating color measurements by utilizing pre-existing transform-based color profiles for use in "smart" color management modules. Also, increased accuracy is achieved by scaling the generated color measurements.

According to another aspect in the case that the transform-based color profile was created using measurements that were measured under viewing conditions other than a D50 white point, the invention scales the generated color measurements with a chromatic adaptation transform contained within the transform-based color profile. In this way, the aspect can accurately produce generated color measurements for devices with different white points.

According to another aspect when the color transform of the color profile is an n-dimensional lookup table, measured data points are extracted from the n-dimensional lookup table. Similarly, when color transform of the color profile is a set of tone reproduction curves and matrix, measured data points are extracted from the set tone reproduction curves and matrix.

In this way, it is able to reduce operating time and increase efficiency by extracting measured data directly from the transform-based profiles for use in a "smart" measurement-based color management module.

In one aspect a measurement-based CMS generates a transform-based profile for a transform-based CMS using parameterized color data and procedures.

In another aspect a first transform is created using a device model, a gamut mapping model, and a profile connection space device model. An AtoB look-up-table is generated using a sampling of a device space and the first transform.

In another aspect the device model is initialized using data in a device model profile. Colorimetric data is then obtained using device color data and the device model and appearance data is created from the colorimetric data using a color appearance. A device gamut boundary used to initialize the gamut mapping model is then generated using the appearance data.

In another aspect the device color data is a sampling of data from the device model profile.

In another aspect the device color data is a full sampling of a device color space.

In another aspect the profile connection space device model is initialized using data in a profile connection space profile. Colorimetric data is obtained using the profile connection space device model. Appearance data is then created from the colorimetric data using a color appearance model and a profile connection space gamut boundary used to initialize the gamut mapping model is generated using the appearance data.

In another aspect a second transform is created using a device model, a gamut mapping model, and a profile connection space device model with a BtoA look-up-table generated using a sampling of a profile connection space and the second transform.

In another aspect the AToB LUT is included in a transform-based profile for a source device, the transform-based profile for use in a transform-based CMM.

In another aspect the BtoA is included in transform-based profile for a destination device, the transform-based profile for use by a transform-based CMM.

In another aspect the measurement-based CMS generates only a portion of the transform-based profile based on a determination of the requirements of a specific transform-based CMS.

In another aspect creation of the transform-based profile is controlled by an automated workflow with no user intervention required.

In another aspect creation of the transform-based profile is controlled by user specifications.

In another aspect a transform-based profile for a transform-based color management system is generated within an application parameterized by color data and procedures using at least one procedure that is selectable and pluggable by a user.

In another aspect a transform-based color management module is customized for use with a specified color output device by providing user-selectable mappings from the International Color Consortium intent to a profile connection space profile and a device model. A profile connection space device model is then generated using the profile connection space profile. A first transform is created using the device model, a gamut mapping model, and the profile connection space device model. Finally, an AtoB look-up-table is generated for use in the transform-based color management module using a sampling of a device space and the first transform.

In another aspect customizing the transform-based color management module further includes creating a second transform using the device model, the gamut mapping model, and the profile connection space device mode and generating a BtoA look-up-table for use in the transform-based color management module using a sampling of a profile connection space and the second transform.

This brief summary has been provided so that the nature of the invention may be understood quickly. A more complete understanding of the invention can be obtained by reference to the following detailed description in connection with the attached drawings and appended claims.

### BRIEF DESCRIPTION OF THE DRAWINGS

Figure 1 is a block diagram depicting the operation of a transform-based color management system.

Figure 2 is a block diagram depicting the operation of a measurement-based "smart" color management system.

Figure 3 is a block diagram depicting a method for generating color measurements from a transform-based device profile.

Figure 4 is a block diagram depicting the method for scaling generated color measurements to a white point other than D50.

Figure 5 is a formula for performing a color transform with a set of reproduction curves and a matrix.

Figure 6 is a formula for performing a color transform with an n-dimensional lookup table.

Figure 7 is a block diagram depicting the operation of a measurement-based "smart" color management system using color measurements generated by a transform-based CMS in accordance with an exemplary embodiment of the present invention.

Figure 8 is a deployment diagram depicting the use of a measurement-based CMM that is part of a measurement-based CMS in an environment wherein some devices use transform-based CMMs from a transform-based CMS in accordance with an exemplary embodiment of the present invention.

Figure 9 is a block diagram depicting the operation of transform-based profile generation process in a measurement-based CMM in accordance with an exemplary embodiment of the present invention.

Figure 10 is a process flow diagram of a portion of a transform-based profile generation process in accordance with an exemplary embodiment of the present invention.

Figure 11 is a process flow diagram of another portion of a transform-based profile generation process in accordance with an exemplary embodiment of the present invention.

Figure 12 is a block diagram illustrating the selection of a mapping from the ICC intent to a PCS profile in accordance with an exemplary embodiment of the present invention.

Figure 13 is a block diagram illustrating the selection of a mapping from the ICC intent to a device model in accordance with an exemplary embodiment of the present invention.

Figure 14 is an architecture diagram for a data processing apparatus, such as a general purpose computing machine, suitable for hosting a transform-based profile generation process in accordance with an exemplary embodiment of the present invention.

### DETAILED DESCRIPTION

The present invention provides a color management method for mathematically generating color measurements from color transforms in transform-based color profiles. The generated color measurements are used as a color measurement data profile in a measurement-based color management system.

Typically, the present invention is implemented in a computing environment. A representative computing system may include computing equipment, peripherals and digital devices which may be used in connection with practicing the present invention. The computing equipment includes a host processor which comprises a personal computer (hereinafter "PC"), preferably an IBM PC-compatible computer having a windowing environment such as Microsoft Windows 98, Windows 2000, Windows Me, Windows XP, or Windows NT, or other windowing systems such as LINUX. In the alternative, the host processor may be an Apple computer or other non-windows based computers. The computing equipment also includes a color monitor, including a display screen, a keyboard for entering text data and user commands, and a pointing device. The pointing device preferably comprises a mouse for pointing and for manipulating objects displayed on the display screen.

The computing equipment also includes computer-readable memory media such as a computer fixed disk and a floppy disk drive. A floppy disk drive provides a means whereby the computing equipment can access information, such as image data, computer-executable process steps, application programs, etc. stored on removable memory media. In the alternative, information can also be retrieved through other means such as a USB storage device connected to a USB port, or through a network interface. Also, a CD-ROM drive and/or a DVD drive may be included so that the computing equipment can access information stored on removable CD-ROM and DVD media.

Various peripheral devices are generally used in the computing system. For example, color bubble jet printers and color laser printers, which form color images on a recording medium such as paper or transparencies or the like are typically employed. Preferably, the printers form color images using cyan, magenta, yellow and black inks, although the present invention can be used with printers and devices which use other colorant combinations. The invention is also usable with other printers that use such colorant combinations, so long as the printer is capable of being interfaced to computing equipment. In addition, other peripherals including digital color scanners, digital color cameras, and digital video cameras may be employed.

The internal architecture of the host processor of the computing equipment includes a central processing unit (CPU) which interfaces with a computer bus. Also interfacing with computer bus are a fixed disk, a network interface, a random access memory (RAM) for use as a main run-time transient memory, a read only memory (ROM), a floppy disk interface, a display interface for the monitor, a keyboard interface for the keyboard, a mouse interface for the pointing device, a scanner interface for the scanner, a printer interface for the printers, and a digital camera interface for the digital camera.

The RAM interfaces with the computer bus so as to provide information stored in the RAM to the CPU during execution of software programs such as an operating system, application programs, such as a color management module, and device drivers. More specifically, the CPU first loads computer-executable process steps from the fixed disk, or another storage device, into a region of the RAM. The CPU can then execute the stored process steps from the RAM in order to execute the loaded computer-executable process steps. Data such as color images or other information can be stored in the RAM, so that the data can be accessed by CPU during the execution of computer-executable process steps need to access and/or modify the data.

The fixed disk contains the operating system, and application programs, such as a color management system program. The fixed disk also contains a digital camera driver, a monitor driver, a printer driver, a scanner driver, and other device drivers. The fixed disk also includes image files, other files, transform-based device profiles for implementing the present invention as described further herein, transform-based color management modules, and measurement-based "smart" color management modules. The color management method of the present invention is preferably performed by computer-executable process steps which are stored on the fixed disk execution by the CPU, such as in one of the application programs or in a measurement-based color management module. The process steps for extracting color measured data from transform-based color profiles of the present invention are described in more detail below.

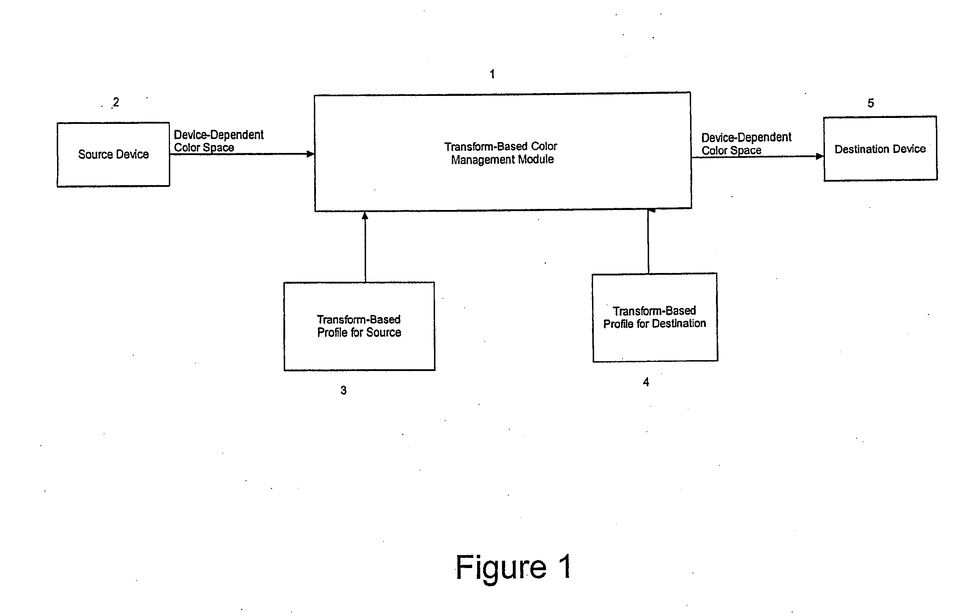

Figure 1 is a block diagram depicting the arrangement of a typical transform-based color management system. Color data from source device 2 is converted from a device-dependent color space (e.g. RGB) to a device-independent color space by color management module (CMM) 1. CMM 1 utilizes a color transform found in transform-based source profile 3. Such source profiles are also often called color profiles or device profiles. In transform-based color management systems, the color transforms in a transform-based profile transforms device-dependent color values into device-independent values defined by either Commission Internationale de l'Enclairage (CIE) XYZ under a D50 illuminant at an illumination level of 500 lux or CIELab under a D50 illuminant at an illumination level of ..500 lux. The device-independent color space is also known as the profile connection space (PCS). Once the source device's color values have been converted to PCS, CMM 1 can then utilize a destination profile to transform the color values from PCS to a different device-dependent color space.

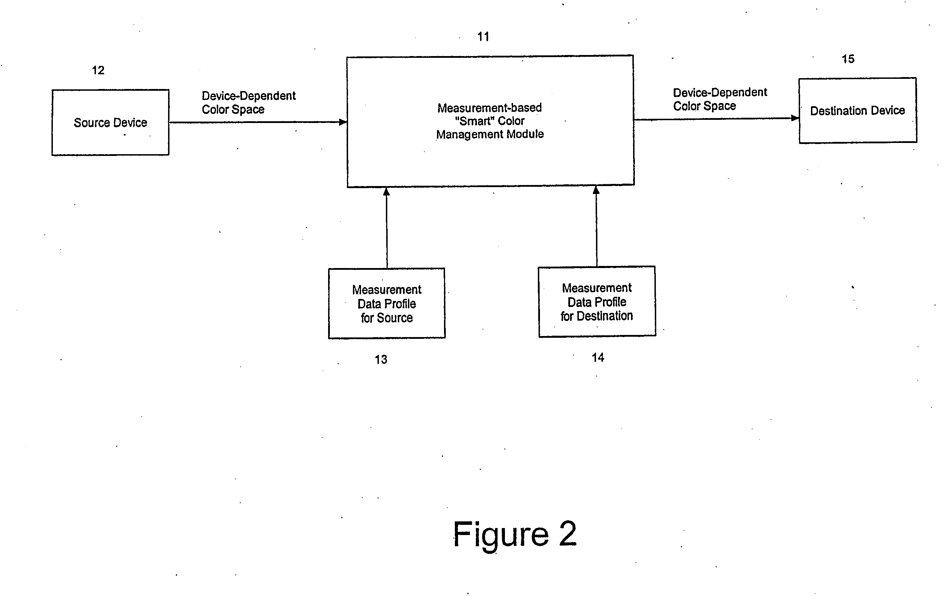

Figure 2 depicts the arrangement of a measurement-based or "smart" color management system. Instead of utilizing color transforms in device profiles to convert from a device-dependent color space to a device-independent space, a "smart" color management system utilizes color measurement data for the source and destination devices. This measurement data is contained in source and destination measurement data profiles 13 and 14. The "smart" CMM constructs a model with the measurement data to map colors from a source device to a device-independent, gamut-less, color appearance space. This model is often called a color appearance-based transfrom. Using a similar technique, the "smart" CMM maps the colors of the device-independent color appearance space to corresponding destination device values. Typically, the measurement data is obtained by measuring the output of a device with a colorimeter, spectrophotometer, or spectroradiometer. The measurement data used by a "smart" color management system is in a scaled CIEXYZ format.

Given the widespread use of transform-based device profiles, it would be convenient to use transform-based device profiles in "smart" measurement based color management systems. However, scaled CIEXYZ measurement data is not explicitly contained in transform-based device profiles, and therefore, transform-based device profiles cannot be directly used by "smart" color management systems.

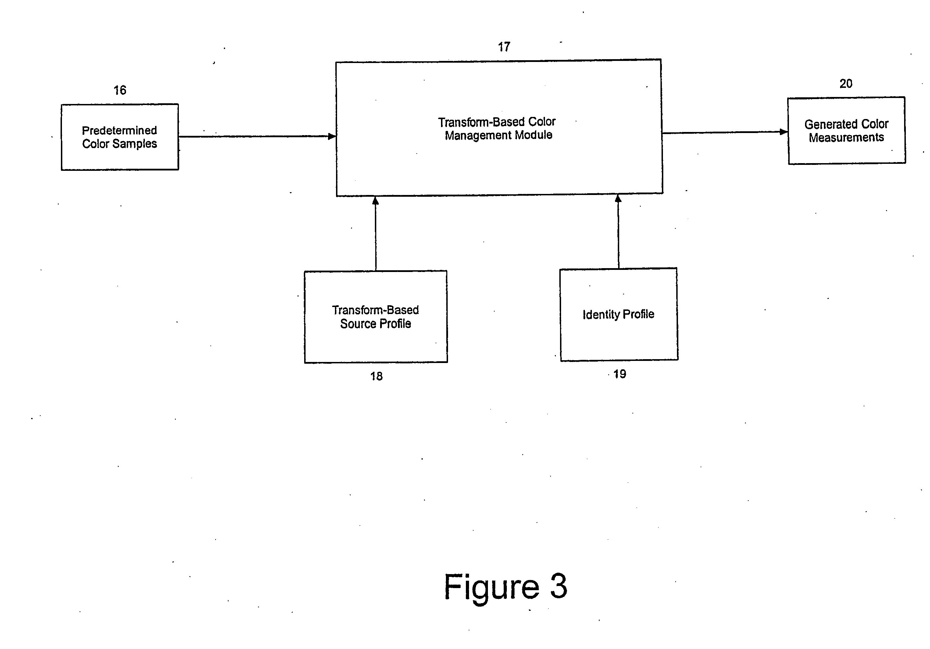

Figure 3 depicts an embodiment for generating CIEXYZ measurement data with a transform-based device profile. In this embodiment, a transform-based CMM is used to generate measurement data. Initially, predetermined device-dependent color samples 16 are supplied to transform-based CMM 17. In the case of an RGB scanner, for example, these color samples represent the RGB values at which corresponding CIEXYZ measurements are desired to be obtained. CMM 17 then accesses transform-based source profile 18, which corresponds to the source device for which color measured data is desired.

CMM 17 next converts the supplied device-dependent color samples into a colorimetric device-independent color space. This conversion is accomplished by using the color transform associated with the media-relative colorimetric or absolute colorimetric rendering intents contained in source profile 18.

Either of the two colorimetric rendering intents can be used because they are both based on measurement-based colorimetric values that are chromatically adapted to a D50 illuminant. In addition, the transform associated with these rendering intents is able to map device colorants to a gamut-less PCS. Since, the absolute colorimetric rendering intent is defined with measurements taken under a D50 illuminant, it is preferred. For example, both of these colorimetric rendering intents are available in transform-based ICC profiles that are Version 4.0 or higher.

The colorimetric color transform converts device colorants to a gamut-less PCS in either a CIEXYZ or CIELab format. Since the measurement data used by the "smart" color management system needs to be in a scaled XYZ format, it is desirable to convert the device-dependent color samples into a CIEXYZ PCS. Now, the CIEXYZ PCS values can be converted into the XYZ measurement data format used by the "smart" color management system. This conversion is accomplished by utilizing the transform contained in identity profile 19.

The transform in identity profile 19 is arranged to take advantage of the fact that the PCS is already in the CIEXYZ format. In order to convert the CIEXYZ PCS values (which range from 0 to 0xFFFF) into generated measurement data, the identity profile provides the transform-based CMM with an identity mapping that transforms the CIEXYZ PCS values into channels. The first channel corresponds to the X component of CIEXYZ, the second channel to the Y component, and the third channel to the Z component. The identity mapping also scales each channel by the decimal fraction s/65535 (65535 is the decimal equivalent of 0xFFFF). The scaling factor s represents the maximum X, Y, or Z value to be used by the "smart" system. Typically, the X, Y, and Z values used by the "smart" system will range from 0 to 100. In that case, s is chosen to be 100. However, it is possible to have values that are greater than 100. In order to avoid losing data and in order to maintain precision, it is preferable to choose a scaling factor that is larger than 100 (e.g. s=120 or s=150). In this way, any data associated with generated measurement values that exceed the anticipated maximum will not be lost.

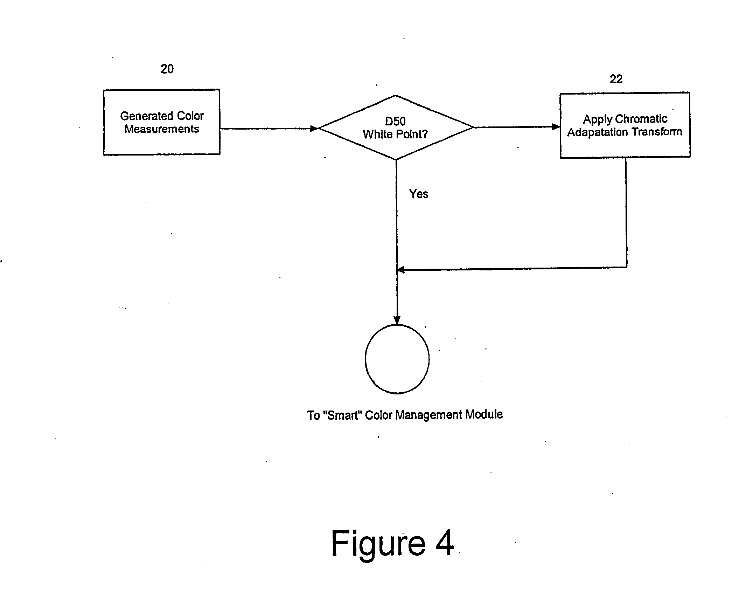

The scaled measurement values generated by CMM 17 may require further processing as shown in Figure 4. Since the colorimetric transforms produce results relative to a D50 illuminant, further processing is required if the color transform associated with the colorimetric rendering intent was created with actual measurements taken under viewing conditions other than D50. If this is the case, the scaled XYZ generated color measurements 20 must also be scaled by applying chromatic adaptation transform (CAT) 22 found in the transform-based profile. After the CAT is applied, the generated XYZ measurement values are relative to the viewing conditions that existed at the time the original measurements were taken.

After any necessary chromatic adaptation transforms have been applied, the generated color measurements are ready to be used as either a source measurement data profile or destination measurement data profile in a "smart" color management system. The "smart" CMM can use the generated color measurements to construct a model, or color appearance-based transform, that maps color values to a device-independent, gamut-less, color appearance space, preferably in the CIECAM97 or CIECAM02 format.

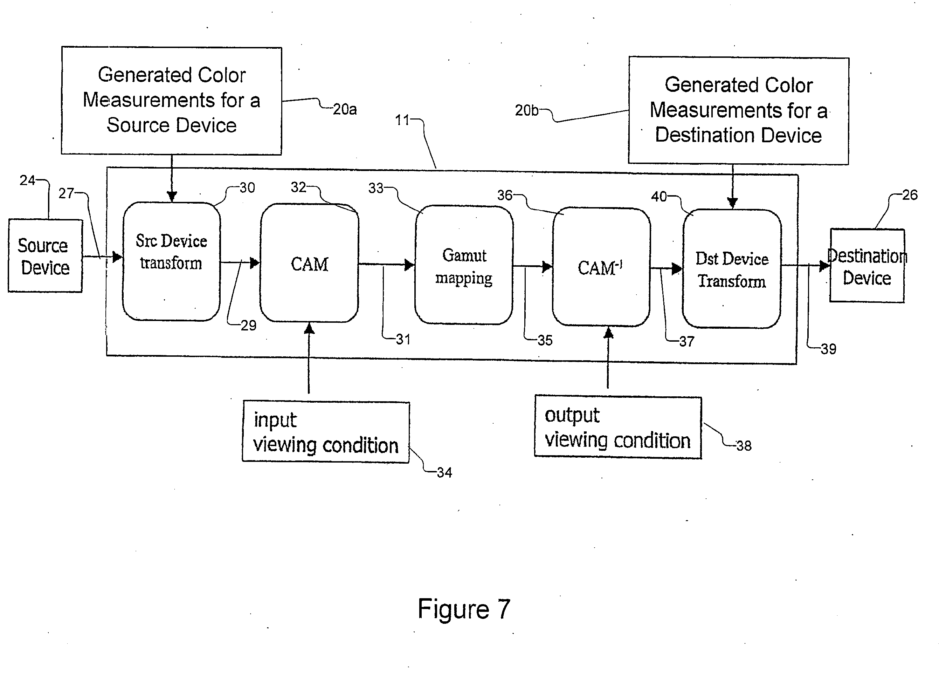

For example, Figure 7 depicts the operation of a measurement-based "smart" color management system using color measurements generated by a transform-based CMS in accordance with an exemplary embodiment of the present invention. In the example, both a source measurement data profile 20a and a destination measurement data profile 20b are depicted as being used with it being understood that either or both profiles may be used either alone or in conjunction with each other. A measurement-based "smart" CMM 11 for a color management system receives the generated color measurements for a source device 20a and uses the generated color measurements for creation of a source device transform 30. The source device transform receives color values 27 in a device dependent color space from a source device 28 and transforms the color values into color values 29 in a device independent color space. The transformed color values are received into a Color Appearance Model (CAM) 32 that is initialized using input viewing conditions 34. The resultant input viewing conditions adjusted color values 31 from CAM 32 are received by a gamut mapping process 33 that maps the color values into mapped color values 35 that fall within the gamut of a destination device 29.

The mapped color values are then received by another CAM 36 initialized using output viewing conditions 38. The resultant output viewing conditions adjusted color values 37 are then transformed into color values 39 in a device dependent color space using a destination device transform 40 created from generated color measurements for a destination device 20b. The color values in the device dependent color space are then transmitted to destination device 15 for use as appropriate.

In addition to utilizing an existing transform-based CMM to generate color measurements, a "smart" CMM could be arranged so as to perform the functions of a transform-based CMM internally.

In another embodiment of the invention, measurement data is extracted from transform-based device profiles without the use of transform-based CMMs and predetermined device-dependent color samples. Instead, the "smart" CMM reads the profile header and transformation tags in the transform-based device profile.

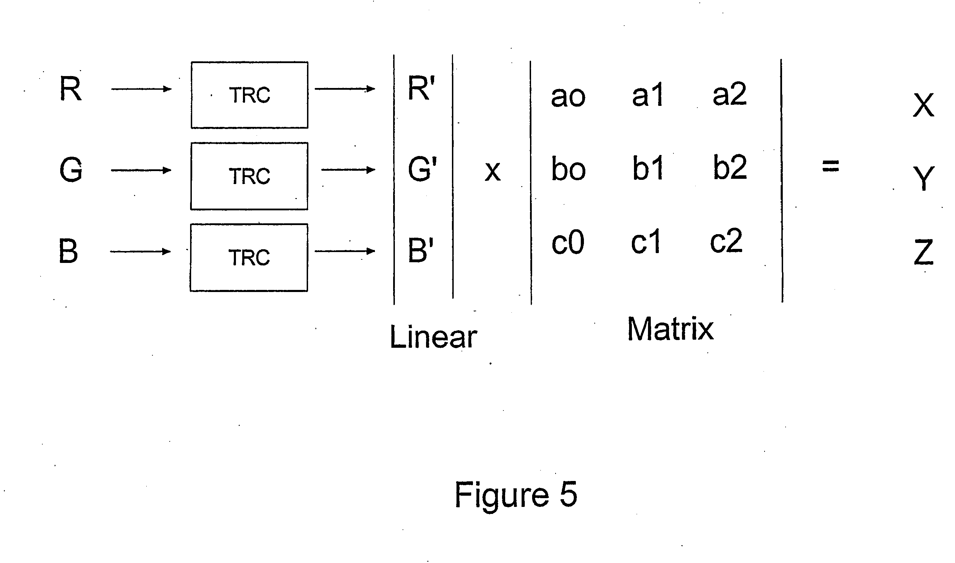

Based on the information that is read, the "smart" CMM can determine what type of colorimetric transform is available in the transform-based device profile. For example, the colorimetric color transform for an RGB monitor will often contain a set of tone reproduction curves (TRC) and a matrix. Figure 5 shows a formula by which a set of tone reproduction curves and matrix transform RGB color data to a CIEXYZ PCS. Rather than using a transform-based CMM to convert device-dependent color samples to CIEXYZ PCS, the "smart" CMM can multiply the set of tone reproduction curves with the matrix to obtain the XYZ measurement values. In addition, the "smart" CMM can apply a chromatic adaptation transform to the extracted XYZ measurement values to scale for a non-D50 white point as described with reference to Figure 4.

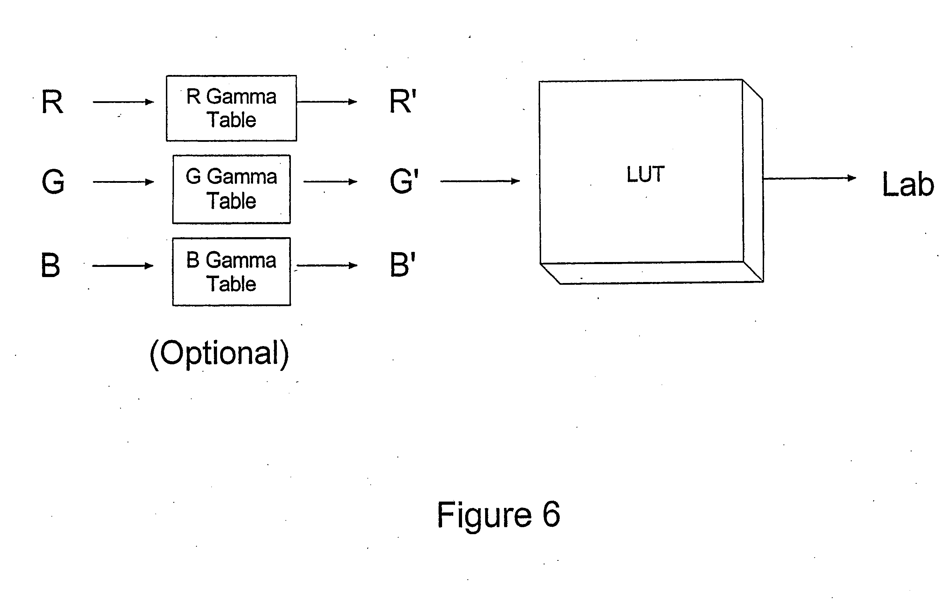

XYZ measurement values can also be extracted from a color transform represented as an n-dimensional lookup table. Figure 6 shows a formula by which a 3-dimensional lookup table transforms RGB device-dependent color values to CIELab PCS. In order to obtain XYZ measurements from the lookup table, linear interpolation sampling of an Lab entry point is performed in order to find the corresponding linear R=G=B= value. If the optional 1-dimensional matrix is used, that matrix is inverted and applied to the linear R=G=B= values to obtain RGB values. The obtained RGB value corresponds to the Lab entry point used for the linear interpolation. In order to obtain an XYZ measurement for the RGB value, the associated Lab entry point is simply converted to CIEXYZ. As with the TRC/matrix transform, the "smart" CMM can apply a chromatic adaptation transform to the extracted XYZ measurement values to scale for a non-D50 white point as described with reference to Figure 4.

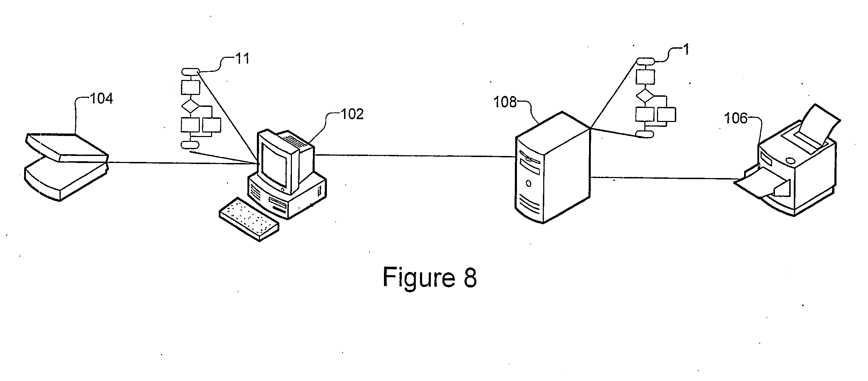

Figure 8 is a deployment diagram depicting the use of a measurement-based CMM that is part of a measurement-based CMS in an environment wherein some devices use transform-based CMMs in accordance with an exemplary embodiment of the present invention. A measurement-based CMM 11, which is part of a measurement-based CMS, is hosted by a data processing system, such as computer 102. The computer may be coupled to a color source device, such as scanner 104, from which the computer receives data including color values for processing.

The computer may also be coupled to another data processing system, such as printer server 108, hosting a transform-based CMM 1. The printer server may be coupled to a destination color device, such as color printer 106.

In operation, the computer transmits data in the form of color values, such as color image data, to the printer server for printing on the color printer. The data may come from the scanner or may come from some other datastore on the computer such as a color image stored in a file. In order to print the data on the color printer, the server must process the color values using the transform-based CMM. To do so, the transform-based CMM requires that transform-based profiles be made available for both the some color device and the destination color device. As the server has a transform-based CMM and is receiving the data for printing from the computer, the server may require the computer to send at least a transform-based profile for the source color device associated with the data for printing. In addition, the server may rely on the computer to supply the server with transform-based profiles for the destination color device.

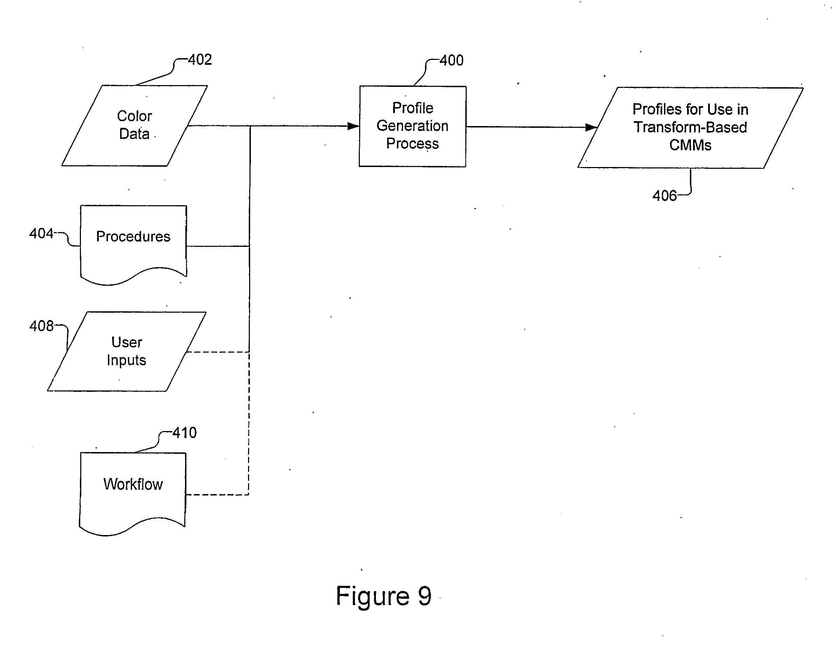

As illustrated in Figure 8, using a measurement-based CMM in conjunction with a transform-based CMM may result in incompatibility problems as the transform-based CMM may be relying on the measurement-based CMM to supply transform-based profiles. Figure 9 is a process flow diagram of a transform-based profile generation process that may be used within the context of a measurement-based CMS in accordance with an exemplary embodiment of the present invention. A transform-based profile generation process 400 may be added to a measurement-based CMM 11 in order for the measurement-based CMM to communicate with a transform-based CMM 1 (both of Figure 8). The transform-based profile generation process receives as inputs color data 402 and procedures 404 that parameterize a measurement-based color system. The transform-based profile generation process uses the color data and procedures to generate a transform-based profile 406 for a transform-based color management system.

Depending on the intended use, the transform-based profile generation process may be implemented as a system utility library or as a stand-alone application. A system utility library requiring no manual intervention is particularly useful to address the desire to print from an operating system using measurement-based profiles to a computer or printer using transform-based profiles. As a system utility library, all selectable parameters are selected by the operating system or a programmer whose code calls the operating system utility. In addition, the measurement-based CMS could still support plug-ins for modeling certain devices or implementing certain gamut mapping algorithms.

A standalone profile building application would address the desire for consistent results between the measurement-based CMS and the transform-based CMS. In this implementation, the measurement-based CMS is used to construct a profile for the transform-based CMS. In this way, consistent device modeling and gamut mapping between the two systems would be achieved. Furthermore, the device modeling can be done using plug-ins provided by the hardware vendors who best understand the behavior of their devices.

To facilitate different types of implementations, the operations of the transform-based profile generation process may be controlled in various ways depending on the type of implementation. For example, the transform-based profile generation process may operate under the control of user inputs 408. These inputs may be a configuration specified by the user in order to turn on and off certain features of the transform-based profile generation process. The user may also specify which color data or procedures the transform-based profile generation process uses by supplying software modules in the form of plug-ins or the like. This flexibility is useful in situations were a user has a specific idea about how they want a transform to be created.

In addition, a transform-based profile generation process may be controlled through the operation of a workflow 410 that specifies how the transform-based profile generation process is to operate. This feature is useful for automating a transform-based profile generation process in order to hide the implementation features from a user, thus making the transform-based profile generation process user-transparent.

By using either workflows or user inputs, the transform-based profile generation process may be incorporated into various types of software objects. For example, the transform-based profile generation process may be included in a measurement-based CMM in order to add compatibility with a transform-based CMM. The transform-based profile generation process may also be incorporated into an operating system of a computer system such that the transform-based profile generation process is accessible to a variety of software objects. In operation, a software object may supply as inputs to the transform-based profile generation process the color data and procedures along with a workflow in order to generate the desired transform-based profiles. A transform-based profile generation process may also be used in a stand-alone application used by a user to generate profiles to the user's specifications in order to customize a color input or output device. For example, a transform-based profile generation process included in a stand-alone application may used to generate transform-based profiles for a specific color device, such as a color monitor, so that colors displayed on a monitor depict how the colors may appear on another surface, such as painted metal.

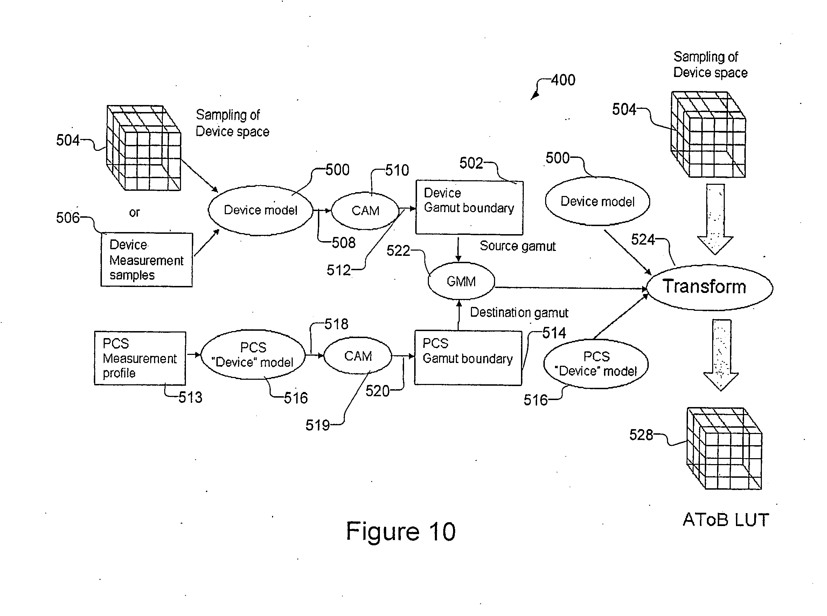

Figure 10 is a process flow diagram of a portion of a transform-based profile generation process in accordance with an exemplary embodiment of the present invention. A transform-based profile generation process 400 initializes a device model 500 using data from a measurement-based device model profile and its associated viewing condition. As the device model is part of the measurement-based device model profile, the device model can convert device model color values to colorimetry and vice versa. This device model may either be a plug-in or part of a CMS.

The transform-based profile generation process then generates a device gamut boundary 502 as follows. Either a sampling of data 504 from the device model profile or a full sampling of the device color space 506 is run through the device model to obtain device colorimetric data 506. The device colorimetric data is run through a Color Appearance Model (CAM) 510 to create appearance data 512. CAM 510 is an instance of a color appearance model element that has been initialized with a set of parameters. For preparation of the device gamut boundary, the parameters represent the conditions under which the source image is viewed. The appearance data is then used to create the device gamut boundary. Construction of the gamut boundary may be accomplished in various ways. A one method is to construct a three-dimensional mesh representing the convex hull of the data points.

Next the transform-based profile generation process uses data from a reference PCS measurement profile 513 to create a gamut boundary 514 for the PCS. As described below, mapping from a device space to a PCS is fundamentally like a color management process used in a measurement-based CMM to map from a device space to another device space. To process the PCS, reference viewing conditions for the PCS are used as specified in standards such as the ICC profile format specification. The information provided in the ICC profile format specification is sufficient to compute all the data needed to initialize CAM 510. For consistency and flexibility, this information may be stored in a measurement-based color profile.

The measurement-based color profile may also be used to store samples that define the reference gamut of the PCS. A transform-based profile generation process as described above has two ways to create gamut boundaries. One way is to sample the complete device space and use the device model to create measurement values. A second way is to use measured samples from the PCS profile to create a reference gamut boundary. While both methods may work, use of measured samples may be more computationally manageable. Note that this profile-based approach is flexible. If it is desired to redefine the reference PCS gamut, all one has to do is change the measurement data in the PCS device profile.

The ICC PCS is a modeling of an ideal device. By creating a PCS "device" model 516 of the PCS and using it as a model of a real device, the transform-based profile generation process can take advantage of the color management processes used in the measurement-based CMM. Creating a device model from colorimetry to the PCS encoding is straightforward. The transform-based profile generation process maps between the true colorimetric values and the PCS encoded values. Since the CMS interface for device models may only support XYZ color values in the XYZ color space, the transform-based profile generation process may also have to map between the XYZ color space and the LAB color space. This is a well-known transformation.

Once the PCS device model is initialized, color data from the PCS measurement profile is run through the device model to obtain PCS colorimetric data 518. The PCS colorimetric data is then run through CAM 519 to create PCS appearance data 520. CAM 519 is an instance of a color appearance model element that has been initialized with a set of parameters. For preparation of the PCS gamut boundary, the parameters represent the conditions specified for the PCS, namely, D50 under 500 Lux. The PCS appearance data is then used to create the PCS gamut boundary

The transform-based profile generation process uses the device gamut boundary and the PCS gamut boundary to initialize a Gamut Mapping Model (GMM) 522. The transform-based profile generation process uses the device model, the GMM, and the PCS device model to create a transform 524. The transform-based profile generation process then transforms sampling of device space 504 to create an AToB LUT 528.

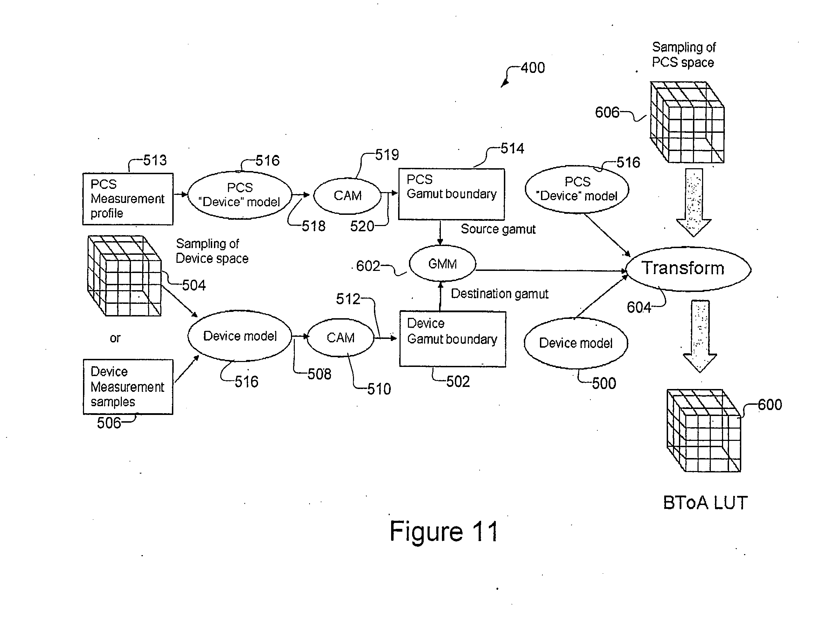

Figure 11 is a process flow diagram of another portion of a transform-based profile generation process in accordance with an exemplary embodiment of the present invention. Figure 6 illustrates the creation of a BToA LUT 600. This is almost identical, with the roles of source and destination exchanged. Also, the full PCS gamut is sampled to create the LUT.

In order to generate BToA LUT 600, transform-based profile generation process 400 initializes a device model 500 using data from a measurement-based device model profile and its associated viewing condition. The transform-based profile generation process then generates a device gamut boundary 502 as follows. Either a sampling of data 504 from the device model profile or a full sampling of the device color space 506 is run through the device model to obtain device colorimetric data 506. The device colorimetric data is then run through a Color Appearance Model (CAM) 510 to create appearance data 512. The appearance data is then used to create the device gamut boundary.

Next the transform-based profile generation process uses data from a reference PCS measurement profile 513 to create a gamut boundary 514 for the PCS.

Once a PCS device model 516 is initialized, color data from the PCS measurement profile is run through the PCS device model to obtain PCS colorimetric data 506. The PCS colorimetric data is then run through CAM 510 to create PCS appearance data 520. The PCS appearance data is then used to create the PCS gamut boundary

The transform-based profile generation process uses the device gamut boundary and the PCS gamut boundary to initialize a Gamut Mapping Model (GMM) 602. The transform-based profile generation process uses the device model, the GMM, and the PCS device model to create a transform 604. The transform-based profile generation process then transforms sampling of PCS space 606 to create BToA LUT 600.

Referring again to Figure 1, once the transform-based generation process finishes the generation of AToB LUT 528 (of Figure 10) or BToA LUT 600 (of Figure 11), the LUTs may be included in a transform-based profile for use by transform-based CMM 1. Specifically, the AToB LUT is included in transform-based profile 3 for source device 2 and the BToA LUT 600 is included in transform-based profile 4 for destination device 5.

In another aspect of the invention, the transform-based profile generation process may be used to generate customized transform-based profiles using user modified PCSs. As an example, the ICC found that one PCS was not sufficiently flexible to meet all the intended uses of a CMS. So, in version 4 of the Profile Specification, the ICC clarified that there are actually two PCS encodings. One is used for the colorimetric intents, another is used for the perceptual intent. (No PCS is specified for the Saturation intent. The ICC has left this part ambiguous.) The colorimetric PCS has a minimum and maximum lightness specified, but the chroma and hue values range to roughly ± 127. Thus, this PCS looks like a rectangular prism. As mentioned above, the perceptual PCS volume resembles the gamut of an inkjet printer.

The two ICC PCSs also have two different digital encodings. In the perceptual PCS, a value of zero represents a lightness of zero. In the colorimetric PCS, a value of zero represents the minimum lightness of the PCS, which is greater than zero. This problem can be solved by having a different device model for each of the PCS encodings.

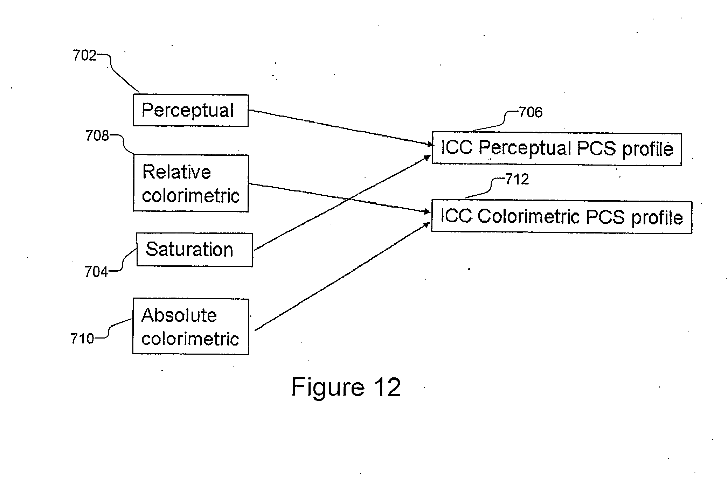

The present invention features a user-selectable mapping from the ICC intent to a PCS profile and a user-selectable mapping from the ICC intent to a device model. Figure 12 is a block diagram illustrating the selection of a mapping from the ICC intent to PCS profile. Perceptual intent data 702 and saturation intent data are mapped into an ICC perceptual intent profile 706. In addition, relative colorimetric intent data 708 and absolute colorimetric intent data 710 can be mapped into an ICC colorimetric PCS profile 712.

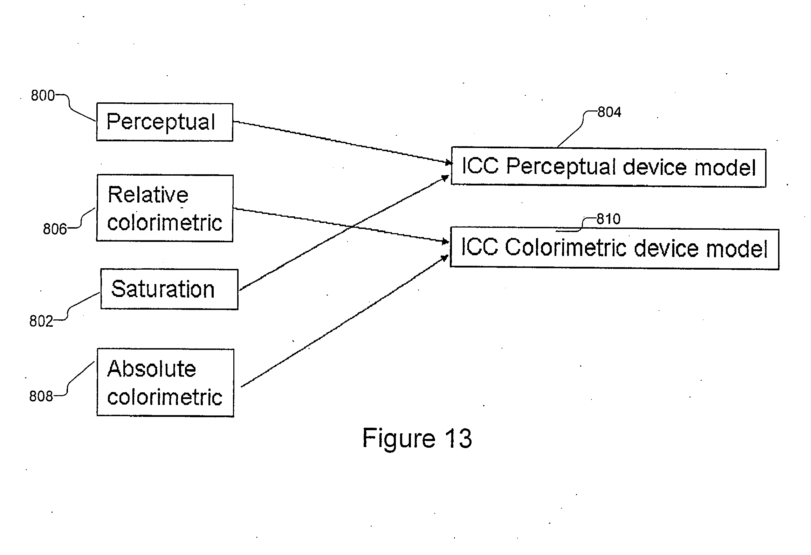

Figure 13 illustrates mapping of intent to a device model. Perceptual intent data 800 and saturation intent data 802 are mapped to an ICC perceptual device model 804. Relative colorimetric intent data 806 and absolute colorimetric intent data 808 may be mapped to an ICC colorimetric device model.

In addition, if the gamut of the device is larger than the gamut of the PCS, then user-selectable Gamut Mapping Algorithms (GMAs) may be used to map from the device gamut to the PCS gamut. Alternatively, a measurement-based CMS may provide a set of default GMAs, with a default mapping from the four ICC intents to the GMAs. In the measurement-based CMM described above, the GMAs may be implemented either by baseline GMMs or by plug-in GMMs.

To create the AToB LUTs for an ICC profile, a transform-based profile generation process maps from a source device's gamut to that of an appropriate PCS. To create the BToA LUTs, the transform-based profile generation process maps from the PCS space to the destination device's gamut. The mapping for the AToB LUTs is quite similar to that used in measurement-based CMS. For the perceptual PCS, the transform-based profile generation process maps the device's plausible gamut to the perceptual PCS gamut boundary, using either clipping or compression for any out of gamut colors. For the colorimetric intents, the transform-based profile generation process may have to clip lightness, but the chroma and hue values will all fit in the colorimetric PCS gamut.

The mapping for the BToA LUTs is a little different. The colorimetric intents are still handled easily; the transform-based profile generation process just clips PCS values to the gamut of the destination device. But the ICC requires that all possible PCS values map to some device value, not merely those within the reference gamut of the perceptual PCS. So the transform-based profile generation process ensures that the GMMs can handle source colors that are outside the reference gamut. In one embodiment of a transform-based profile generation process, this is handled by clipping those colors to the device's gamut boundary. In another embodiment of a transform-based profile generation process, the reference PCS gamut is mapped to a color volume within the device's gamut boundary and then the transform-based profile generation process compresses the source colors outside the reference PCS gamut into the rest of the device's gamut.

In some instances, it may be determined that the transform-based profile generation process is creating an ICC profile to be consumed by a specific CMM, such as a CMM installed on a specific printer. If it is known that the specific CMM does not perform profile validation, then the transform-based profile generation process can optimize itself by only supplying the portion of the profile, such as specific tags, that will actually be used by the CMM. For example, if the transform-based profile generation process is creating an ICC profile for embedding in an image, only the AToB LUTs will be used, so the transform-based profile generation process does not have to generate the BToA LUTs. Further more, if the transform-based profile generation process knows enough about the CMM and the application being used to render the image on the output device, the transform-based profile generation process may know the specific tag that will be used from the profile. In that case, the transform-based profile generation process need only generate that specific tag. The other LUTs may either be left empty or "dummy" values may be created. These are the smallest possible tag values that will produce a profile acceptable to the destination device.

In another embodiment of the invention, transform-based profile generation process is used as a generator pipeline to create an ICC profile builder. The advantages of using this pipeline are that the process would be as consistent as possible to the behavior of a measurement-based CMS, while still supporting the ICC.

Because these embodiments use the measurement-based CMS's device models, it is assured that the transform-based profile generation process can build an ICC profile starting from any measurement-based profile accepted by the CMS. Note that this also means that the transform-based profile generation process will use any extension data that may have been added to the measurement profile and understood by proprietary plug-in device models.

The explanation above was provided in terms of the ICC and its specific PCS. But there is nothing in the approach that is limited to the ICC PCS. By specifying a different profile or profiles for the device data and viewing conditions, it is possible to modify the reference PCS used in the present invention.

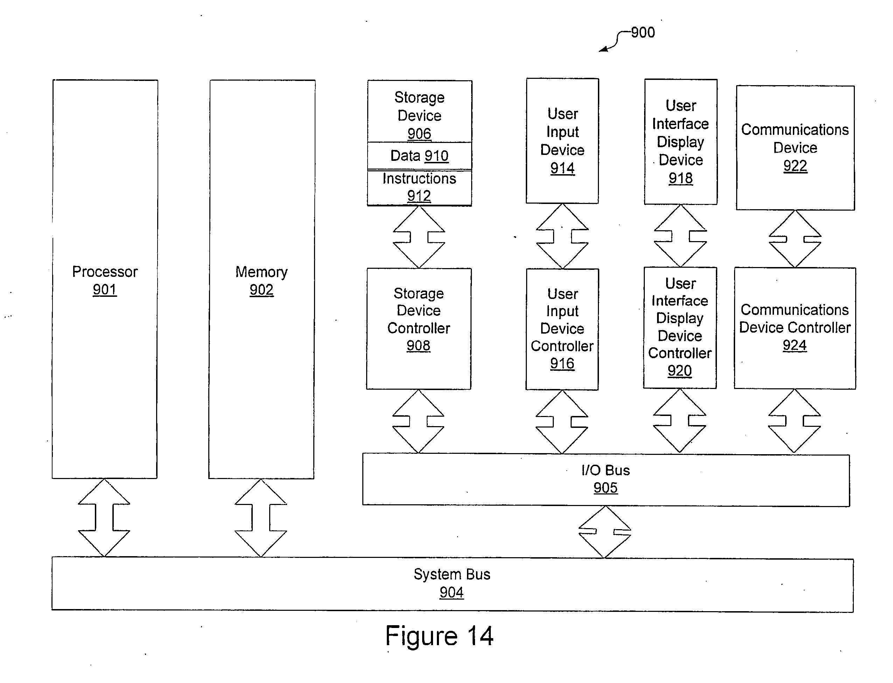

Figure 14 is an architecture diagram for a data processing apparatus, such as a general purpose computing machine, suitable for hosting a transform-based profile generation process or measurement-based profile generation process in accordance with an exemplary embodiment of the present invention. The data processing apparatus 900 includes a processor 901 coupled to a memory 902 via system bus 904. The processor is also coupled to external Input/Output (I/O) devices via the system bus and an I/O bus 905. A storage device having computer system readable media 906 is coupled to the processor via a storage device controller 908 and the I/O bus and the system bus. The storage device is used by the processor to store and read data 910 and program instructions 912 used to implement the features of a transform-based profile generation process as described above.

The processor may be further coupled to a user output device 918 via a user output device controller 920 coupled to the I/O bus. The processor uses the user output device to display a user interface to a user to prompt the user of selections of color data and procedures used in the transform-based profile generation process.

The processor may be further coupled to a user input device 914 via a user input device controller 916 coupled to the I/O bus. The processor uses the user input device to receive selections of color data and procedures used in the transform-based profile generation process.

The processor may be further coupled to a communications device 922 via a communications device controller 924 coupled to the I/O bus. The processor may use the communications device to communicate with a transform-based CMM for transfer of the generated transform-based profiles.

In operation, the processor loads the program instructions from the storage device into the memory. The processor executes the loaded program instructions to implement the features of the transform-based profile generation process as described above.

The present invention has been described above with respect to particular illustrative embodiments. It is understood that the present invention is not limited to the above-described embodiments and that various changes and modifications may be made by those skilled in the relevant art without departing from the scope of the invention.

## Claims

1. A color processing method for generating a transform-based profile for a transform-based color management system from a measurement-based profile holding colorimetric data, the transform-based profile is adapted to transform color data in a source color space to color data in a destination color space, **characterized by**
a first initializing step for initializing a device model (500), which transforms between device dependent color data and device independent color data, by using the colorimetric data held by the measurement-based profile,
a first transforming step for transforming first sampling data (504, 506) in a device dependent color space to first color appearance data (512) by using the device model (500) and a color appearance model (510);
a first creating step for creating a device gamut boundary (502) based on the first color appearance data (512);
a second initializing step for initializing a profile connection space device model (516), which transforms between device dependent color data and device independent color data in profile connection space encoding, by using data in a profile connection space measurement profile;
a second transforming step for transforming color data (513) in the profile connection space measurement profile to second color appearance data (520) by using the profile connection space device model (516) and a color appearance model (519);
a second creating step for creating a profile connection space gamut boundary (514) based on the second color appearance data (520);
a third initializing step for initializing a gamut mapping model (522; 602) by using the profile connection space gamut boundary (514) and the device gamut boundary (502);
a generating step (524; 604) for generating a transform by using the device model (500), the profile connection space device model (516) and the gamut mapping model (522; 602), and generating a lookup table (528; 600) by transforming sampling data (504; 606) in the source color space to data in the destination color space by using the transform; and
including the generated look-up table (528; 600) in the transform-based profile, which transforms color data in the source color space to color data in the destination color space.

2. A color processing method of Claim 1, wherein
the source color space is a device dependent color space and the destination color space is the profile connection space,
the third initializing step is adapted to initialize the gamut mapping model (522) by using the profile connection space gamut boundary (514) as a destination gamut boundary and the device gamut boundary (502) as a source gamut boundary, and
the generating step is adapted to transform sampling data (504) in the device dependent color space and to generate an AtoB lookup table (528).

3. A color processing method of Claim 1, wherein
the source color space is the profile connection space and the destination color space is a device dependent color space and,
the third initializing step is adapted to initialize the gamut mapping model (602) by using the profile connection space gamut boundary (514) as a source gamut boundary and the device gamut boundary (502) as a destination gamut boundary, and
the generating step is adapted to transform sampling data (504) in the profile connection space and to generate a BtoA lookup table (600).

4. A color processing method of Claim 1, wherein
a first transform-based profile for transforming a device dependent color space in the profile connection space is generated, wherein the source color space is a device dependent color space and the destination color space is the profile connection space, the third initializing step is adapted to initialize the gamut mapping model (522) by using the profile connection space gamut boundary (514) as a destination gamut boundary and the device gamut boundary (502) as a source gamut boundary, and the generating step is adapted to transform sampling data (504) in the device dependent color space and to generate an AtoB lookup table (528), and
a second transform-based profile for transforming the profile connection space in a device dependent color space is generated, wherein the source color space is the profile connection space and the destination color space is a device dependent color space and, the third initializing step is adapted to initialize the gamut mapping model (602) by using the profile connection space gamut boundary (514) as a source gamut boundary and the device gamut boundary (502) as a destination gamut boundary, and the generating step is adapted to transform sampling data (504) in the profile connection space and to generate a BtoA lookup table (600).

5. An apparatus for generating a transform-based profile for a transform-based color management system from a measurement-based profile holding colorimetric data, the transform-based profile is adapted to transform color data in a source color space to color data in a destination color space, **characterized by** comprising:
a first initializing means for initializing a device model (500), which transforms between device dependent color data and device independent color data, by using the colorimetric data held by the measurement-based profile,
a first transforming means for transforming first sampling data (504, 506) in a device dependent color space to first color appearance data (512) by using the device model (500) and a color appearance model (510);
a first creating means for creating a device gamut boundary (502) based on the first color appearance data (512);
a second initializing means for initializing a profile connection space device model (516), which transforms between device dependent color data and device independent color data in profile connection space encoding, by using data in a profile connection space measurement profile;
a second transforming means for transforming color data (513) in the profile connection space measurement profile to second color appearance data (520) by using the profile connection space device model (516) and a color appearance model (519);
a second creating means for creating a profile connection space gamut boundary (514) based on the second color appearance data (520);
a third initializing means for initializing a gamut mapping model (522; 602) by using the profile connection space gamut boundary (514) and the device gamut boundary (502);
a generating means (524; 604) for generating a transform by using the device model (500), the profile connection space device model (516) and the gamut mapping model (522; 602), and for generating a lookup table (528; 600) by transforming sampling data (504; 606) in the source color space into data in the destination color space by using the transform; and
including the generated look-up table (528; 600) in the transform-based profile, which transforms color data in the source color space to color data in the destination color space.

6. An apparatus of Claim 5, wherein
the source color space is a device dependent color space and the destination color space is the profile connection space,
the third initializing means is adapted to initialize the gamut mapping model (522) by using the profile connection space gamut boundary (514) as a destination gamut boundary and the device gamut boundary (502) as a source gamut boundary, and
the generating means is adapted to transform sampling data (504) in the device dependent color space and to generate an AtoB lookup table (528).

7. An apparatus of Claim 5, wherein
the source color space is the profile connection space and the destination color space is a device dependent color space and,
the third initializing means is adapted to initialize the gamut mapping model (602) by using the profile connection space gamut boundary (514) as a source gamut boundary and the device gamut boundary (502) as a destination gamut boundary, and
the generating means is adapted to transform sampling data (504) in the profile connection space and to generate a BtoA lookup table (600).

8. An apparatus of Claim 5, wherein
a first transform-based profile for transforming a device dependent color space in the profile connection space is generated, wherein the source color space is a device dependent color space and the destination color space is the profile connection space, the third initializing means is adapted to initialize the gamut mapping model (522) by using the profile connection space gamut boundary (514) as a destination gamut boundary and the device gamut boundary (502) as a source gamut boundary, and the generating means is adapted to transform sampling data (504) in the device dependent color space and to generate an AtoB lookup table (528), and
a second transform-based profile for transforming the profile connection space in a device dependent color space is generated, wherein the source color space is the profile connection space and the destination color space is a device dependent color space and, the third initializing means is adapted to initialize the gamut mapping model (602) by using the profile connection space gamut boundary (514) as a source gamut boundary and the device gamut boundary (502) as a destination gamut boundary, and the generating means is adapted to transform sampling data (504) in the profile connection space and to generate a BtoA lookup table (600).

9. A computer program product having computer-executable instructions which, when executed by a computer, generate a transform-based profile for a transform-based color management system from a measurement-based profile holding colorimetric data, the transform-based profile is adapted to transform color data in a source color space to color data in a destination color space, **characterized in that** the computer-executable instructions are executable to perform
a first initializing step for initializing a device model (500), which transforms between device dependent color data and device independent color data, by using the colorimetric data held by the measurement-based profile,
a first transforming step for transforming first sampling data (504, 506) in a device dependent color space to first color appearance data (512) by using the device model (500) and a color appearance model (510);
a first creating step for creating a device gamut boundary (502) based on the first color appearance data (512);
a second initializing step for initializing a profile connection space device model (516), which transforms between device dependent color data and device independent color data in profile connection space encoding, by using data in a profile connection space measurement profile;
a second transforming step for transforming color data (513) in the profile connection space measurement profile to second color appearance data (520) by using the profile connection space device model (516) and a color appearance model (519);
a second creating step for creating a profile connection space gamut boundary (514) based on the second color appearance data (520);
a third initializing step for initializing a gamut mapping model (522; 602) by using the profile connection space gamut boundary (514) and the device gamut boundary (502);
a generating step (524; 604) for generating a transform by using the device model (500), the profile connection space device model (516) and the gamut mapping model (522; 602), and generating a lookup table (528; 600) by transforming sampling data (504; 606) in the source color space into data in the destination color space by using the transform; and
including the generated look-up table (528; 600) in the transform-based profile, which transforms color data in the source color space to color data in the destination color space.

10. A computer program product of Claim 9, wherein
the source color space is a device dependent color space and the destination color space is the profile connection space,
the third initializing step is adapted to initialize the gamut mapping model (522) by using the profile connection space gamut boundary (514) as a destination gamut boundary and the device gamut boundary (502) as a source gamut boundary, and
the generating step is adapted to transform sampling data (504) in the device dependent color space and to generate an AtoB lookup table (528).

11. A computer program product of Claim 9, wherein
the source color space is the profile connection space and the destination color space is a device dependent color space and,
the third initializing step is adapted to initialize the gamut mapping model (602) by using the profile connection space gamut boundary (514) as a source gamut boundary and the device gamut boundary (502) as a destination gamut boundary, and
the generating step is adapted to transform sampling data (504) in the profile connection space and to generate a BtoA lookup table (600).

12. A computer program product of Claim 9, wherein
a first transform-based profile for transforming a device dependent color space in the profile connection space is generated, wherein the source color space is a device dependent color space and the destination color space is the profile connection space, the third initializing step is adapted to initialize the gamut mapping modei (522) by using the profile connection space gamut boundary (514) as a destination gamut boundary and the device gamut boundary (502) as a source gamut boundary, and the generating step is adapted to transform sampling data (504) in the device dependent color space and to generate an AtoB lookup table (528), and
a second transform-based profile for transforming the profile connection space in a device dependent color space is generated, wherein the source color space is the profile connection space and the destination color space is a device dependent color space and, the third initializing step is adapted to initialize the gamut mapping model (602) by using the profile connection space gamut boundary (514) as a source gamut boundary and the device gamut boundary (502) as a destination gamut boundary, and the generating step is adapted to transform sampling data (504) in the profile connection space and to generate a BtoA lookup table (600).

## Patentansprüche

1. Farbverarbeitungsverfahren zum Erzeugen eines transformationsbasierten Profils für ein transformationsbasiertes Farbverwaltungssystem aus einem messungsbasierten Profil, das farbmetrische Daten hält, wobei das transformationsbasierte Profil zum Transformieren von Farbdaten in einem Quellfarbraum in Farbdaten in einem Zielfarbraum angepasst ist, **gekennzeichnet durch**
einen ersten Initialisierungsschritt zum Initialisieren eines Gerätemodells (500), das zwischen geräteabhängigen Farbdaten und geräteunabhängigen Farbdaten transformiert, **durch** Verwendung der **durch** das messungsbasierte Profil gehaltenen farbmetrischen Daten;
einen ersten Transformationsschritt zum Transformieren von ersten Abtastdaten (504, 506) in einem geräteabhängigen Farbraum in erste Farberscheinungsdaten (512) **durch** Verwendung des Gerätemodells (500) und eines Farberscheinungsmodells (510);
einen ersten Bildungsschritt zum Bilden einer Gerät-Gamutgrenze (502) basierend auf den ersten Farberscheinungsdaten (512);
einen zweiten Initialisierungsschritt zum Initialisieren eines Profilverbindungsraum-Gerätemodells (516), das zwischen geräteabhängigen Farbdaten und geräteunabhängigen Farbdaten in einer Profilverbindungsraumkodierung transformiert, **durch** Verwendung von Daten in einem Profilverbindungsraum-Messprofil;
einen zweiten Transformationsschritt zum Transformieren von Farbdaten (513) in dem Profilverbindungsraum-Messprofil in zweite Farberscheinungsdaten (520) **durch** Verwendung des Profilverbindungsraum-Gerätemodells (516) und eines Farberscheinungsmodells (519);
einen zweiten Bildungsschritt zum Bilden einer Profilverbindungsraum-Gamutgrenze (514) basierend auf den zweiten Farberscheinungsdaten (520);
einen dritten Initialisierungsschritt zum Initialisieren eines Gamutabbildungsmodells (522; 602) **durch** Verwendung der Profilverbindungsraum-Gamutgrenze (514) und der Gerät-Gamutgrenze (502);
einen Erzeugungsschritt (524; 604) zum Erzeugen einer Transformation **durch** Verwendung des Gerätemodells (500), des Profilverbindungsraum-Gerätemodells (516) und des Gamutabbildungsmodells (522; 602) und zum Erzeugen einer Nachschlagetabelle (528; 600) **durch** Transformation von Abtastdaten (504; 606) in dem Quellfarbraum in Daten in dem Zielfarbraum **durch** Verwendung der Transformation; und
Einbinden der erzeugten Nachschlagetabelle (528; 600) in das transformationsbasierte Profil, das Farbdaten in dem Quellfarbraum in Farbdaten in dem Zielfarbraum transformiert.

2. Farbverarbeitungsverfahren gemäß Anspruch 1, wobei
der Quellfarbraum ein geräteabhängiger Farbraum ist und der Zielfarbraum der Profilverbindungsraum ist,
der dritte Initialisierungsschritt angepasst ist zum Initialisieren des Gamutabbildungsmodells (522) durch Verwendung der Profilverbindungsraum-Gamutgrenze (514) als Zielgamutgrenze und der Gerät-Gamutgrenze (502) als Quellgamutgrenze, und
der Erzeugungsschritt angepasst ist zum Transformieren von Abtastdaten (504) in dem geräteabhängigen Farbraum und zum Erzeugen einer A-auf-B-Nachschlagetabelle (528).

3. Farbverarbeitungsverfahren gemäß Anspruch 1, wobei
der Quellfarbraum der Profilverbindungsraum ist und der Zielfarbraum ein geräteabhängiger Farbraum ist,
der dritte Initialisierungsschritt angepasst ist zum Initialisieren des Gamutabbildungsmodells (602) durch Verwendung der Profilverbindungsraum-Gamutgrenze (514) als Quellgamutgrenze und der Gerät-Gamutgrenze (502) als Zielgamutgrenze, und
der Erzeugungsschritt angepasst ist zum Transformieren von Abtastdaten (504) in dem Profilverbindungsraum und zum Erzeugen einer B-auf-A-Nachschlagetabelle (600).

4. Farbverarbeitungsverfahren gemäß Anspruch 1, wobei
ein erstes transformationsbasiertes Profil zum Transformieren eines geräteabhängigen Farbraums in den Profilverbindungsraum erzeugt wird, wobei der Quellfarbraum ein geräteabhängiger Farbraum ist und der Zielfarbraum der Profilverbindungsraum ist, der dritte Initialisierungsschritt angepasst ist zum Initialisieren des Gamutabbildungsmodells (522) durch Verwendung der Profilverbindungsraum-Gamutgrenze (514) als Zielgamutgrenze und der Gerät-Gamutgrenze (502) als Quellgamutgrenze, und der Erzeugungsschritt angepasst ist zum Transformieren von Abtastdaten (504) in dem geräteabhängigen Farbraum und zum Erzeugen einer A-auf-B-Nachschlagetabelle (528), und
ein zweites transformationsbasiertes Profil zum Transformieren des Profilverbindungsraums in einen geräteabhängigen Farbraum erzeugt wird, wobei der Quellfarbraum der Profilverbindungsraum ist und der Zielfarbraum ein geräteabhängiger Farbraum ist, der dritte Initialisierungsschritt angepasst ist zum Initialisieren des Gamutabbildungsmodells (602) durch Verwendung der Profilverbindungsraum-Gamutgrenze (514) als Quellgamutgrenze und der Gerät-Gamutgrenze (502) als Zielgamutgrenze, und der Erzeugungsschritt angepasst ist zum Transformieren von Abtastdaten (504) in dem Profilverbindungsraum und zum Erzeugen einer B-auf-A-Nachschlagetabelle (600).

5. Vorrichtung zum Erzeugen eines transformationsbasierten Profils für ein transformationsbasiertes Farbverwaltungssystem aus einem messungsbasierten Profil, das farbmetrische Daten hält, wobei das transformationsbasierte Profil angepasst ist zum Transformieren von Farbdaten in einem Quellfarbraum in Farbdaten in einem Zielfarbraum, **gekennzeichnet durch**:
eine erste Initialisierungseinrichtung zum Initialisieren eines Gerätemodells (500), das zwischen geräteabhängigen Farbdaten und geräteunabhängigen Farbdaten transformiert, **durch** Verwendung der **durch** das messungsbasierte Profil gehaltenen farbmetrischen Daten;
eine erste Transformationseinrichtung zum Transformieren von ersten Abtastdaten (504, 506) in einem geräteabhängigen Farbraum in erste Farberscheinungsdaten (512) **durch** Verwendung des Gerätemodells (500) und eines Farberscheinungsmodells (510);
eine erste Bildungseinrichtung zum Bilden einer Gerät-Gamutgrenze (502) basierend auf den ersten Farberscheinungsdaten (512);
eine zweite Initialisierungseinrichtung zum Initialisieren eines Profilverbindungsraum-Gerätemodells (516), das zwischen geräteabhängigen Farbdaten und geräteunabhängigen Farbdaten in einer Profilverbindungsraumkodierung transformiert, **durch** Verwendung von Daten in einem Profilverbindungsraum-Messprofil;
eine zweite Transformationseinrichtung zum Transformieren von Farbdaten (513) in dem Profilverbindungsraum-Messprofil in zweite Farberscheinungsdaten (520) **durch** Verwendung des Profilverbindungsraum-Gerätemodells (516) und eines Farberscheinungsmodells (519);
eine zweite Bildungseinrichtung zum Bilden einer Profilverbindungsraum-Gamutgrenze (514) basierend auf den zweiten Farberscheinungsdaten (520);
eine dritte Initialisierungseinrichtung zum Initialisieren eines Gamutabbildungsmodells (522; 602) **durch** Verwendung der Profilverbindungsraum-Gamutgrenze (514) und der Gerät-Gamutgrenze (502);
eine Erzeugungseinrichtung (524; 604) zum Erzeugen einer Transformation **durch** Verwendung des Gerätemodells (500), des Profilverbindungsraum-Gerätemodells (516) und des Gamutabbildungsmodells (522; 602) und zum Erzeugen einer Nachschlagetabelle (528; 600) **durch** Transformation von Abtastdaten (504; 606) in dem Quellfarbraum in Daten in dem Zielfarbraum **durch** Verwendung der Transformation; und
Einbindung der erzeugten Nachschlagetabelle (528; 600) in das transformationsbasierte Profil, das Farbdaten in dem Quellfarbraum in Farbdaten in dem Zielfarbraum transformiert.

6. Vorrichtung gemäß Anspruch 5, wobei
der Quellfarbraum ein geräteabhängiger Farbraum ist und der Zielfarbraum der Profilverbindungsraum ist,
die dritte Initialisierungseinrichtung angepasst ist zum Initialisieren des Gamutabbildungsmodells (522) durch Verwendung der Profilverbindungsraum-Gamutgrenze (514) als Zielgamutgrenze und der Gerät-Gamutgrenze (502) als Quellgamutgrenze, und
die Erzeugungseinrichtung angepasst ist zum Transformieren von Abtastdaten (504) in dem geräteabhängigen Farbraum und zum Erzeugen einer A-auf-B-Nachschlagetabelle (528).

7. Vorrichtung gemäß Anspruch 5, wobei
der Quellfarbraum der Profilverbindungsraum ist und der Zielfarbraum ein geräteabhängiger Farbraum ist,
die dritte Initialisierungseinrichtung angepasst ist zum Initialisieren des Gamutabbildungsmodells (602) durch Verwendung der Profilverbindungsraum-Gamutgrenze (514) als Quellgamutgrenze und der Gerät-Gamutgrenze (502) als Zielgamutgrenze, und
die Erzeugungseinrichtung angepasst ist zum Transformieren von Abtastdaten (504) in dem Profilverbindungsraum und zum Erzeugen einer B-auf-A-Nachschlagetabelle (600).

8. Vorrichtung gemäß Anspruch 5, wobei
ein erstes transformationsbasiertes Profil zum Transformieren eines geräteabhängigen Farbraums in den Profilverbindungsraum erzeugt wird, wobei der Quellfarbraum ein geräteabhängiger Farbraum ist und der Zielfarbraum der Profilverbindungsraum ist, die dritte Initialisierungseinrichtung angepasst ist zum Initialisieren des Gamutabbildungsmodells (522) durch Verwendung der Profilverbindungsraum-Gamutgrenze (514) als Zielgamutgrenze und der Gerät-Gamutgrenze (502) als Quellgamutgrenze, und die Erzeugungseinrichtung angepasst ist zum Transformieren von Abtastdaten (504) in dem geräteabhängigen Farbraum und zum Erzeugen einer A-auf-B-Nachschlagetabelle (528), und
ein zweites transformationsbasiertes Profil zum Transformieren des Profilverbindungsraums in einen geräteabhängigen Farbraum erzeugt wird, wobei der Quellfarbraum der Profilverbindungsraum ist und der Zielfarbraum ein geräteabhängiger Farbraum ist, die dritte Initialisierungseinrichtung angepasst ist zum Initialisieren des Gamutabbildungsmodells (602) durch Verwendung der Profilverbindungsraum-Gamutgrenze (514) als Quellgamutgrenze und der Gerät-Gamutgrenze (502) als Zielgamutgrenze, und die Erzeugungseinrichtung angepasst ist zum Transformieren von Abtastdaten (504) in dem Profilverbindungsraum und zum Erzeugen einer B-auf-A-Nachschlagetabelle (600).

9. Computerprogrammprodukt mit computerausführbaren Anweisungen, die bei Ausführung durch einen Computer ein transformationsbasiertes Profil für ein transformationsbasiertes Farbverwaltungssystem aus einem messungsbasierten Profil erzeugen, das farbmetrische Daten hält, wobei das transformationsbasierte Profil angepasst ist zum Transformieren von Farbdaten in einem Quellfarbraum in Farbdaten in einem Zielfarbraum, **dadurch gekennzeichnet, dass** die computerausführbaren Anweisungen ausführbar sind zum Durchführen von
einem ersten Initialisierungsschritt zum Initialisieren eines Gerätemodells (500), das zwischen geräteabhängigen Farbdaten und geräteunabhängigen Farbdaten transformiert, durch Verwendung der durch das messungsbasierte Profil gehaltenen farbmetrischen Daten;
einem ersten Transformationsschritt zum Transformieren von ersten Abtastdaten (504, 506) in einem geräteabhängigen Farbraum in erste Farberscheinungsdaten (512) durch Verwendung des Gerätemodells (500) und eines Farberscheinungsmodells (510);
einem ersten Bildungsschritt zum Bilden einer Gerät-Gamutgrenze (502) basierend auf den ersten Farberscheinungsdaten (512);
einem zweiten Initialisierungsschritt zum Initialisieren eines Profilverbindungsraum-Gerätemodells (516), das zwischen geräteabhängigen Farbdaten und geräteunabhängigen Farbdaten in einer Profilverbindungsraumkodierung transformiert, durch Verwendung von Daten in einem Profilverbindungsraum-Messprofil;
einem zweiten Transformationsschritt zum Transformieren von Farbdaten (513) in dem Profilverbindungsraum-Messprofil in zweite Farberscheinungsdaten (520) durch Verwendung des Profilverbindungsraum-Gerätemodells (516) und eines Farberscheinungsmodells (519);
einem zweiten Bildungsschritt zum Bilden einer Profilverbindungsraum-Gamutgrenze (514) basierend auf den zweiten Farberscheinungsdaten (520);
einem dritten Initialisierungsschritt zum Initialisieren eines Gamutabbildungsmodells (522; 602) durch Verwendung der Profilverbindungsraum-Gamutgrenze (514) und der Gerät-Gamutgrenze (502);
einem Erzeugungsschritt (524; 604) zum Erzeugen einer Transformation durch Verwendung des Gerätemodells (500), des Profilverbindungsraum-Gerätemodells (516) und des Gamutabbildungsmodells (522; 602) und zum Erzeugen einer Nachschlagetabelle (528; 600) durch Transformation von Abtastdaten (504; 606) in dem Quellfarbraum in Daten in dem Zielfarbraum durch Verwendung der Transformation; und
einem Einbinden der erzeugten Nachschlagetabelle (528; 600) in das transformationsbasierte Profil, das Farbdaten in dem Quellfarbraum in Farbdaten in dem Zielfarbraum transformiert.

10. Computerprogrammprodukt gemäß Anspruch 9, wobei
der Quellfarbraum ein geräteabhängiger Farbraum ist und der Zielfarbraum der Profilverbindungsraum ist,
der dritte Initialisierungsschritt angepasst ist zum Initialisieren des Gamutabbildungsmodells (522) durch Verwendung der Profilverbindungsraum-Gamutgrenze (514) als Zielgamutgrenze und der Gerät-Gamutgrenze (502) als Quellgamutgrenze, und
der Erzeugungsschritt angepasst ist zum Transformieren von Abtastdaten (504) in dem geräteabhängigen Farbraum und zum Erzeugen einer A-auf-B-Nachschlagetabelle (528).

11. Computerprogrammprodukt gemäß Anspruch 9, wobei
der Quellfarbraum der Profilverbindungsraum ist und der Zielfarbraum ein geräteabhängiger Farbraum ist,
der dritte Initialisierungsschritt angepasst ist zum Initialisieren des Gamutabbildungsmodells (602) durch Verwendung der Profilverbindungsraum-Gamutgrenze (514) als Quellgamutgrenze und der Gerät-Gamutgrenze (502) als Zielgamutgrenze, und
der Erzeugungsschritt angepasst ist zum Transformieren von Abtastdaten (504) in dem Profilverbindungsraum und zum Erzeugen einer B-auf-A-Nachschlagetabelle (600).

12. Computerprogrammprodukt gemäß Anspruch 9, wobei
ein erstes transformationsbasiertes Profil zum Transformieren eines geräteabhängigen Farbraums in den Profilverbindungsraum erzeugt wird, wobei der Quellfarbraum ein geräteabhängiger Farbraum ist und der Zielfarbraum der Profilverbindungsraum ist, der dritte Initialisierungsschritt angepasst ist zum Initialisieren des Gamutabbildungsmodells (522) durch Verwendung der Profilverbindungsraum-Gamutgrenze (514) als Zielgamutgrenze und der Gerät-Gamutgrenze (502) als Quellgamutgrenze, und der Erzeugungsschritt angepasst ist zum Transformieren von Abtastdaten (504) in dem geräteabhängigen Farbraum und zum Erzeugen einer A-auf-B-Nachschlagetabelle (528), und
ein zweites transformationsbasiertes Profil zum Transformieren des Profilverbindungsraums in einen geräteabhängigen Farbraum erzeugt wird, wobei der Quellfarbraum der Profilverbindungsraum ist und der Zielfarbraum ein geräteabhängiger Farbraum ist, der dritte Initialisierungsschritt angepasst ist zum Initialisieren des Gamutabbildungsmodells (602) durch Verwendung der Profilverbindungsraum-Gamutgrenze (514) als Quellgamutgrenze und der Gerät-Gamutgrenze (502) als Zielgamutgrenze, und der Erzeugungsschritt angepasst ist zum Transformieren von Abtastdaten (504) in dem Profilverbindungsraum und zum Erzeugen einer B-auf-A-Nachschlagetabelle (600).

## Revendications

1. Procédé de traitement des couleurs destiné à générer un profil à base de transformée pour un système de gestion des couleurs à base de transformée à partir d'un profil à base de mesures contenant des données colorimétriques, le profil à base de transformée étant apte à transformer des données de couleurs dans un espace des couleurs source en des données de couleurs dans un espace des couleurs de destination, **caractérisé par**
une première étape d'initialisation destinée à initialiser un modèle de dispositif (500) qui effectue une transformation entre des données de couleurs dépendant du dispositif et des données de couleurs indépendantes du dispositif, en utilisant les données colorimétriques contenues dans le profil à base de mesures,
une première étape de transformation destinée à transformer des première données d'échantillonnage (504, 506) dans un espace des couleurs dépendant du dispositif en des premières données d'aspect des couleurs (512) en utilisant le modèle de dispositif (500) et un modèle d'aspect des couleurs (510) ;
une première étape de création destinée à créer une limite de gamme des couleurs de dispositif (502) sur la base des premières données d'aspect des couleurs (512) ;
une deuxième étape d'initialisation destinée à initialiser un modèle de dispositif dans l'espace des connexions de profils (516), qui effectue une transformation entre des données de couleurs dépendant du dispositif et des données de couleurs indépendantes du dispositif par un codage dans l'espace des connexions de profils, en utilisant des données contenues dans un profil de mesure dans l'espace des connexions de profils ;
une deuxième étape de transformation destinée à transformer des données de couleurs (513) contenues dans le profil de mesure dans l'espace des connexions de profils en des deuxièmes données d'aspect des couleurs (520) en utilisant le modèle de dispositif dans l'espace des connexions de profils (516) et un modèle d'aspect des couleurs (519) ;
une deuxième étape de création destinée à créer une limite de gamme des couleurs dans l'espace des connexions de profils (514) sur la base des deuxièmes données d'aspect des couleurs (520) ;
une troisième étape d'initialisation destinée à initialiser un modèle de correspondance des gammes de couleurs (522 ; 602) en utilisant la limite de gamme des couleurs dans l'espace des connexions de profils (514) et la limite de gamme des couleurs de dispositif (502);
une étape de génération (524 ; 604) destinée à générer une transformée en utilisant le modèle de dispositif (500), le modèle de dispositif dans l'espace des connexions de profils (516) et le modèle de correspondance des gammes de couleurs (522 ; 602), et à générer une table de consultation (528 ; 600) en transformant des données d'échantillonnage (504 ; 606) dans l'espace des couleurs source en des données dans l'espace des couleurs de destination en utilisant la transformée ; et
l'inclusion de la table de consultation générée (528 ; 600) dans le profil à base de transformée, qui transforme des données de couleurs dans l'espace des couleurs source en des données de couleurs dans l'espace des couleurs de destination.

2. Procédé de traitement des couleurs selon la revendication 1, dans lequel
l'espace des couleurs source est un espace des couleurs dépendant du dispositif et l'espace des couleurs de destination est l'espace des connexions de profils,
la troisième étape d'initialisation est apte à initialiser le modèle de correspondance des gammes de couleurs (522) en utilisant la limite de gamme des couleurs dans l'espace des connexions de profils (514) en tant que limite de gamme des couleurs de destination et la limite de gamme des couleurs de dispositif (502) en tant que limite de gamme des couleurs source, et
l'étape de génération est apte à transformer des données d'échantillonnage (504) dans l'espace des couleurs dépendant du dispositif et à générer une table de consultation de A vers B (528).

3. Procédé de traitement des couleurs selon la revendication 1, dans lequel
l'espace des couleurs source est l'espace des connexions de profils et l'espace des couleurs de destination est un espace des couleurs dépendant du dispositif et
la troisième étape d'initialisation est apte à initialiser le modèle de correspondance des gammes de couleurs (602) en utilisant la limite de gamme des couleurs dans l'espace des connexions de profils (514) en tant que limite de gamme des couleurs source et la limite de gamme des couleurs de dispositif (502) en tant que limite de gamme des couleurs de destination, et
l'étape de génération est apte à transformer des données d'échantillonnage (504) dans l'espace des connexions de profils et à générer une table de consultation de B vers A (600).

4. Procédé de traitement des couleurs selon la revendication 1, dans lequel
un premier profil à base de transformée destiné à transformer un espace des couleurs dépendant du dispositif dans l'espace des connexions de profils est généré, l'espace des couleurs source étant un espace des couleurs dépendant du dispositif et l'espace des couleurs de destination étant l'espace des connexions de profils, la troisième étape d'initialisation étant apte à initialiser le modèle de correspondance des gammes de couleurs (522) en utilisant la limite de gamme des couleurs dans l'espace des connexions de profils (514) en tant que limite de gamme des couleurs de destination et la limite de gamme des couleurs de dispositif (502) en tant que limite de gamme des couleurs source, et l'étape de génération est apte à transformer des données d'échantillonnage (504) dans l'espace des couleurs dépendant du dispositif et à générer une table de consultation de A vers B (528), et
un deuxième profil à base de transformée destiné à transformer l'espace des connexions de profils en un espace des couleurs dépendant du dispositif est généré, l'espace des couleurs source étant l'espace des connexions de profils et l'espace des couleurs de destination étant un espace des couleurs dépendant du dispositif, et la troisième étape d'initialisation est apte à initialiser le modèle de correspondance des gammes de couleurs (602) en utilisant la limite de gamme des couleurs dans l'espace des connexions de profils (514) en tant que limite de gamme des couleurs source et la limite de gamme des couleurs de dispositif (502) en tant que limite de gamme des couleurs de destination, et l'étape de génération est apte à transformer des données d'échantillonnage (504) dans l'espace des connexions de profils et à générer une table de consultation de B vers A (600).

5. Appareil destiné à générer un profil à base de transformée pour un système de gestion des couleurs à base de transformée à partir d'un profil à base de mesures contenant des données colorimétriques, le profil à base de transformée étant apte à transformer des données de couleurs dans un espace des couleurs source en des données de couleurs dans un espace des couleurs de destination, **caractérisé en ce qu'**il comprend :
un premier moyen d'initialisation destiné à initialiser un modèle de dispositif (500), qui effectue une transformation entre des données de couleurs dépendant du dispositif et des données de couleurs indépendantes du dispositif, en utilisant les données colorimétriques contenues dans le profil à base de mesures,
un premier moyen de transformation destiné à transformer les données d'échantillonnage (504, 506) dans un espace des couleurs dépendant du dispositif en des premières données d'aspect des couleurs (512) en utilisant le modèle de dispositif (500) et un modèle d'aspect des couleurs (510) ;
un premier moyen de création destiné à créer une limite de gamme des couleurs de dispositif (502) sur la base des premières données d'aspect des couleurs (512) ;
un deuxième moyen d'initialisation destiné à initialiser un modèle de dispositif d'espace des connexions de profils (516), qui effectue une transformation entre des données de couleurs dépendant du dispositif et des données de couleurs indépendantes du dispositif par un codage dans un espace des connexions de profils, en utilisant des données contenues dans un profil de mesure dans l'espace des connexions de profils ;
un deuxième moyen de transformation destiné à transformer des données de couleurs (513) contenues dans le profil de mesure d'espace des connexions de profils en des deuxièmes données d'aspect des couleurs (520) en utilisant le modèle de dispositif dans l'espace des connexions de profils (516) et un modèle d'aspect des couleurs (519) ;
un deuxième moyen de création destiné à créer une limite de gamme des couleurs dans l'espace des connexions de profils (514) sur la base des deuxièmes données d'aspect des couleurs (520) ;
un troisième moyen d'initialisation destiné à initialiser un modèle de correspondance des gammes de couleurs (522 ; 602) en utilisant la limite de gamme des couleurs dans l'espace des connexions de profils (514) et la limite de gamme des couleurs de dispositif (502);
un moyen générateur (524 ; 604) destiné à générer une transformée en utilisant le modèle de dispositif (500), le modèle de dispositif dans l'espace des connexions de profils (516) et le modèle de correspondance des gammes de couleurs (522 ; 602), et à générer une table de consultation (528 ; 600) en transformant des données d'échantillonnage (504 ; 606) dans l'espace des couleurs source en des données dans l'espace des couleurs de destination en utilisant la transformée ; et
l'inclusion de la table de consultation générée (528 ; 600) dans le profil à base de transformée, qui transforme des données de couleurs dans l'espace des couleurs source en des données de couleurs dans l'espace des couleurs de destination.

6. Appareil selon la revendication 5, dans lequel
l'espace des couleurs source est un espace des couleurs dépendant du dispositif et l'espace des couleurs de destination est l'espace des connexions de profils,
le troisième moyen d'initialisation est apte à initialiser le modèle de correspondance des gammes de couleurs (522) en utilisant la limite de gamme des couleurs dans l'espace des connexions de profils (514) en tant que limite de gamme des couleurs de destination et la limite de gamme des couleurs de dispositif (502) en tant que limite de gamme des couleurs source, et
le moyen générateur est apte à transformer des données d'échantillonnage (504) dans l'espace des couleurs dépendant du dispositif et à générer une table de consultation de A vers B (528).

7. Appareil selon la revendication 5, dans lequel
l'espace des couleurs source est l'espace des connexions de profils et l'espace des couleurs de destination est un espace des couleurs dépendant du dispositif et
le troisième moyen d'initialisation est apte à initialiser le modèle de correspondance des gammes de couleurs (602) en utilisant la limite de gamme des couleurs dans l'espace des connexions de profils (514) en tant que limite de gamme des couleurs source et la limite de gamme des couleurs de dispositif (502) en tant que limite de gamme des couleurs de destination, et
le moyen générateur est apte à transformer des données d'échantillonnage (504) dans l'espace des connexions de profils et à générer une table de consultation de B vers A (600).

8. Appareil selon la revendication 5, dans lequel
un premier profil à base de transformée destiné à transformer un espace des couleurs dépendant du dispositif dans l'espace des connexions de profils est généré, l'espace des couleurs source étant un espace des couleurs dépendant du dispositif et l'espace des couleurs de destination étant l'espace des connexions de profils, le troisième moyen d'initialisation étant apte à initialiser le modèle de correspondance des gammes de couleurs (522) en utilisant la limite de gamme des couleurs dans l'espace des connexions de profils (514) en tant que limite de gamme des couleurs de destination et la limite de gamme des couleurs de dispositif (502) en tant que limite de gamme des couleurs source, et le moyen générateur est apte à transformer des données d'échantillonnage (504) dans l'espace des couleurs dépendant du dispositif et à générer une table de consultation de A vers B (528), et
un deuxième profil à base de transformée destiné à transformer l'espace des connexions de profils en un espace des couleurs dépendant du dispositif est généré, l'espace des couleurs source étant l'espace des connexions de profils et l'espace des couleurs de destination étant un espace des couleurs dépendant du dispositif, et le troisième moyen d'initialisation est apte à initialiser le modèle de correspondance des gammes de couleurs (602) en utilisant la limite de gamme des couleurs dans l'espace des connexions de profils (514) en tant que limite de gamme des couleurs source et la limite de gamme des couleurs de dispositif (502) en tant que limite de gamme des couleurs de destination, et le moyen générateur est apte à transformer des données d'échantillonnage (504) dans l'espace des connexions de profils et à générer une table de consultation de B vers A (600).

9. Produit de programme informatique comportant des instructions exécutables par ordinateur qui, lorsqu'elles sont exécutées par un ordinateur, génèrent un profil à base de transformée pour un système de gestion des couleurs à base de transformée à partir d'un profil à base de mesures contenant des données colorimétriques, le profil à base de transformée étant apte à transformer des données de couleurs dans un espace des couleurs source en des données de couleurs dans un espace des couleurs de destination, **caractérisé en ce que** les instructions exécutables par ordinateur peuvent être exécutées pour effectuer :
une première étape d'initialisation destinée à initialiser un modèle de dispositif (500), qui effectue une transformation entre des données de couleurs dépendant du dispositif et des données de couleurs indépendantes du dispositif, en utilisant les données colorimétriques contenues dans le profil à base de mesures,
une première étape de transformation destinée à transformer des premières données d'échantillonnage (504, 506) dans un espace des couleurs dépendant du dispositif en des premières données d'aspect des couleurs (512) en utilisant le modèle de dispositif (500) et un modèle d'aspect des couleurs (510) ;
une première étape de création destinée à créer une limite de gamme des couleurs de dispositif (502) sur la base des premières données d'aspect des couleurs (512) ;
une deuxième étape d'initialisation destinée à initialiser un modèle de dispositif dans l'espace des connexions de profils (516), qui effectue une transformation entre des données de couleurs dépendant du dispositif et des données de couleurs indépendantes du dispositif par un codage dans l'espace des connexions de profils, en utilisant des données contenues dans un profil de mesure dans l'espace des connexions de profils ;
une deuxième étape de transformation destinée à transformer des données de couleurs (513) contenues dans le profil de mesure dans l'espace des connexions de profils en des deuxièmes données d'aspect des couleurs (520) en utilisant le modèle de dispositif dans l'espace des connexions de profils (516) et un modèle d'aspect des couleurs (519) ;
une deuxième étape de création destinée à créer une limite de gamme des couleurs dans l'espace des connexions de profils (514) sur la base des deuxièmes données d'aspect des couleurs (520) ;
une troisième étape d'initialisation destinée à initialiser un modèle de correspondance des gammes de couleurs (522 ; 602) en utilisant la limite de gamme des couleurs dans l'espace des connexions de profils (514) et la limite de gamme des couleurs de dispositif (502) ;
une étape de génération (524 ; 604) destinée à générer une transformée en utilisant le modèle de dispositif (500), le modèle de dispositif dans l'espace des connexions de profils (516) et le modèle de correspondance des gammes de couleurs (522 ; 602), et à générer une table de consultation (528 ; 600) en transformant des données d'échantillonnage (504 ; 606) dans l'espace des couleurs source en des données dans l'espace des couleurs de destination en utilisant la transformée ; et
l'inclusion de la table de consultation générée (528 ; 600) dans le profil à base de transformée, qui transforme des données de couleurs dans l'espace des couleurs source en des données de couleurs dans l'espace des couleurs de destination.

10. Produit de programme informatique selon la revendication 9, dans lequel
l'espace des couleurs source est un espace des couleurs dépendant du dispositif et l'espace des couleurs de destination est l'espace des connexions de profils,
la troisième étape d'initialisation est apte à initialiser le modèle de correspondance des gammes de couleurs (522) en utilisant la limite de gamme des couleurs dans l'espace des connexions de profils (514) en tant que limite de gamme des couleurs de destination et la limite de gamme des couleurs de dispositif (502) en tant que limite de gamme des couleurs source, et
l'étape de génération est apte à transformer des données d'échantillonnage (504) dans l'espace des couleurs dépendant du dispositif et à générer une table de consultation de A vers B (528).

11. Produit de programme informatique selon la revendication 9, dans lequel
l'espace des couleurs source est l'espace des connexions de profils et l'espace des couleurs de destination est un espace des couleurs dépendant du dispositif, et
la troisième étape d'initialisation est apte à initialiser le modèle de correspondance des gammes de couleurs (602) en utilisant la limite de gamme des couleurs dans l'espace des connexions de profils (514) en tant que limite de gamme des couleurs source et la limite de gamme des couleurs de dispositif (502) en tant que limite de gamme des couleurs de destination, et
l'étape de génération est apte à transformer des données d'échantillonnage (504) contenues dans l'espace des connexions de profils et à générer une table de consultation de B vers A (600).

12. Produit de programme informatique selon la revendication 9, dans lequel
un premier profil à base de transformée destiné à transformer un espace des couleurs dépendant du dispositif dans l'espace des connexions de profils est généré, l'espace des couleurs source étant un espace des couleurs dépendant du dispositif et l'espace des couleurs de destination étant l'espace des connexions de profils, la troisième étape d'initialisation étant apte à initialiser le modèle de correspondance des gammes de couleurs (522) en utilisant la limite de gamme des couleurs dans l'espace des connexions de profils (514) en tant que limite de gamme des couleurs de destination et la limite de gamme des couleurs de dispositif (502) en tant que limite de gamme des couleurs source, et l'étape de génération est apte à transformer les données d'échantillonnage (504) dans l'espace des couleurs dépendant du dispositif et à générer une table de consultation de A vers B (528), et
un deuxième profil à base de transformée destiné à transformer l'espace des connexions de profils en un espace des couleurs dépendant du dispositif est généré, l'espace des couleurs source étant l'espace des connexions de profils et l'espace des couleurs de destination étant un espace des couleurs dépendant du dispositif, et la troisième étape d'initialisation est apte à initialiser le modèle de correspondance des gammes de couleurs (602) en utilisant la limite de gamme des couleurs dans l'espace des connexions de profils (514) en tant que limite des gammes de couleurs source et la limite de gamme des couleurs de dispositif (502) en tant que limite de gamme des couleurs de destination, et l'étape de génération est apte à transformer des données d'échantillonnage (504) dans l'espace des connexions de profils et à générer une table de consultation de B vers A (600).
